(19) Europäisches Patentamt
European Patent Office
Office européen des brevets

(11) EP 4 664 363 A1

(12) **EUROPEAN PATENT APPLICATION**
published in accordance with Art. 153(4) EPC

(43) Date of publication:
**17.12.2025 Bulletin 2025/51**

(21) Application number: **23921357.2**

(22) Date of filing: **18.12.2023**

(51) International Patent Classification (IPC):
***G06N 5/045*** *(2023.01)*

(52) Cooperative Patent Classification (CPC):
**G06F 16/906; G06N 5/045**

(86) International application number:
**PCT/JP2023/045177**

(87) International publication number:
**WO 2024/166538 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.02.2023 JP 2023016871**

(71) Applicant: **FUJITSU LIMITED**
**Kawasaki-shi, Kanagawa 211-8588 (JP)**

(72) Inventors:
- **KANAMORI, Kentaro**
  **Kawasaki-shi, Kanagawa 211-8588 (JP)**
- **TAKAGI, Takuya**
  **Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

# (54) EVALUATION PROGRAM, EVALUATION METHOD, AND INFORMATION PROCESSING DEVICE

(57) An evaluation program causing a computer to execute a process. The process includes: generating, when a portion of values of a plurality of attributes included in input data has a defect, complementary data of a plurality of patterns obtained by complementing the defect in a plurality of ways; determining perturbation information including an attribute to be changed and a change amount from among the plurality of attributes of complementary data in order to change a label predicted by the complementary data of the plurality of patterns; and evaluating the perturbation information based on a determination result as to whether the perturbation information determined in the complementary data of one pattern among the plurality of patterns can change the label also with respect to the complementary data of another pattern among the plurality of patterns.

FIG.3

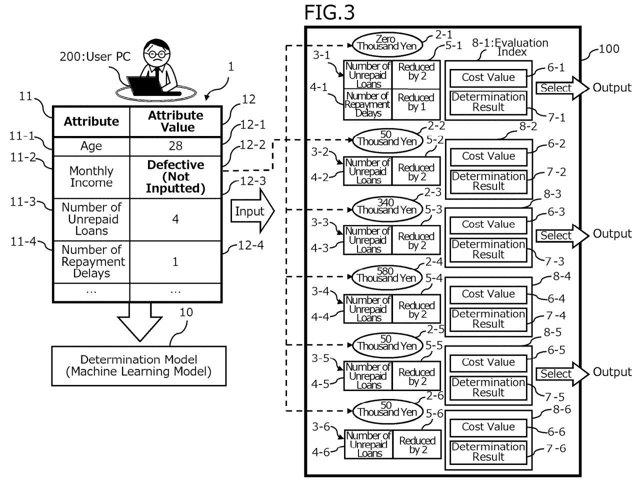




Processed by Luminess, 75001 PARIS (FR)

## Description

TECHNICAL FIELD

The present embodiment relates to an evaluation program, an evaluation method, and an information processing apparatus.

BACKGROUND ART

A model that predicts a label to which a prediction target belongs using a plurality of attributes and attribution values such as a matter, an object, and a person that are the prediction targets as input values can be generated by machine learning or the like using a computer. It may be desired to know which attribution value of the prediction target is to be changed and how much the attribution value is to be changed so that the label that is the prediction result to which the prediction target belongs can be changed. Here, it is conceivable to suggest an attribution value appropriate to be changed using a computer.

In one example, in counterfactual explanation (CE), a perturbation vector including one or a plurality of change attributes for changing a label and change amounts of the attributes is provided to a user. When a perturbation vector is given, the user can interpret the perturbation vector as an "action" for obtaining a desired determination result. According to such a technology, a constructive explanation regarding the prediction result can be presented to the user, thereby leading to trust building from the user.

CITATION LIST

PATENT DOCUMENT

[Patent Document 1] International Publication Pamphlet No. WO 2022/003816.

SUMMARY OF THE INVENTION

PROBLEMS TO BE SOLVED BY THE INVENTION

When a portion of attribution values of input data has a defect, there is a problem that it is difficult to evaluate a change attribute and a change amount that correspond to an action to be suggested for obtaining a desired result.

In one aspect, an object of the present embodiment is to enable evaluation of a change attribute and a change amount that correspond to an action to be suggested for obtaining a desired result when a portion of attribution values of input data has a defect.

MEANS TO SOLVE THE PROBLEM

According to an aspect of the embodiments, an evaluation program may cause a computer to execute a process. The process includes the following. The process may include generating, when a portion of values of a plurality of attributes included in input data has a defect, complementary data of a plurality of patterns obtained by complementing the defect in a plurality of ways. The process may include determining perturbation information including an attribute to be changed and a change amount from among the plurality of attributes of complementary data in order to change a label predicted by the complementary data of the plurality of patterns. The process may include evaluating the perturbation information based on a determination result as to whether the perturbation information determined in the complementary data of one pattern among the plurality of patterns can change the label also with respect to the complementary data of another pattern among the plurality of patterns.

EFFECT OF THE INVENTION

According to one embodiment, the present embodiment can evaluate a change attribute and a change amount that correspond to an action to be suggested for obtaining a desired result when a portion of attribution values of input data has a defect.

BRIEF DESCRIPTION OF DRAWINGS

Fig. 1 is a diagram illustrating an example of an action suggestion process when input data does not have a defect in an information processing apparatus as an example of an embodiment.

Fig. 2 is a diagram illustrating an example of a perturbation vector determination process for changing a label.

Fig. 3 is a diagram illustrating an example of the action suggestion process when input data has a defect in the information processing apparatus as an example of the embodiment.

Fig. 4 is a diagram illustrating a hardware configuration of the information processing apparatus as an example of the embodiment.

Fig. 5 is a diagram illustrating a functional configuration of the information processing apparatus as an example of the embodiment.

Fig. 6 is a diagram illustrating an example of a complementary data generation process in the information processing apparatus as an example of the embodiment.

Fig. 7 is a diagram illustrating an example of an action optimization process in the information processing apparatus as an example of the embodiment.

Fig. 8 is a diagram illustrating an example of a complement_action set and a cost value.

Fig. 9 is a diagram illustrating a complement_action set selection process.

Fig. 10 is a diagram illustrating details of the complement_action set selection process.

Fig. 11 is a diagram illustrating an example of a stage of selecting a first set from the complement_action set.

Fig. 12 is a diagram illustrating an example of a stage of selecting a second set from the complement_action set subsequent to Fig. 11.

Fig. 13 is a diagram illustrating an example of a stage of selecting a third set from the complement_action set subsequent to Fig. 12.

Fig. 14 is a flowchart illustrating the action suggestion process in the information processing apparatus as an example of the embodiment.

Fig. 15 is a diagram illustrating an example of suggesting an action of changing prediction from loan rejection to approval in credit examination when the input data has a defect.

Fig. 16 is a diagram illustrating an example of the embodiment in action suggestion for improving a health condition.

## DESCRIPTION OF EMBODIMENT(S)

Hereinafter, embodiments related to the present evaluation program, evaluation method, and information processing apparatus are described with reference to the drawings. However, the embodiments described below are merely examples, and there is no intention to exclude the application of various modifications and techniques that are not explicitly described in the embodiments. That is, the present embodiment can be variously modified and implemented without departing from the gist thereof. Each drawing is not intended to include only the components illustrated in the drawing but may include other functions and the like.

### (A) Configuration

Fig. 1 is a diagram illustrating an example of an action suggestion process when input data 1 does not have a defect in an information processing apparatus 100 as an example of an embodiment. The information processing apparatus 100 may function as an action suggestion device. Fig. 1 illustrates an example when the information processing apparatus 100 suggests an action of changing prediction from loan rejection to approval in credit examination.

The input data 1 includes a plurality of attributes 11-1 to 11-4 (may be collectively referred to as attributes 11) and attribution values 12-1 to 12-4 (may be collectively referred to as attribution values 12) of the respective attributes. The input data is also referred to as attribute data. In one example, the input data 1 may be input by a user from a user PC 200 (that is, a user terminal).

The input data 1 is input to a determination model 10. The determination model 10 may be a machine learning model machine-learned by an existing method. The determination model 10 predicts a label based on the input data 1. As an example, the determination model 10 predicts loan rejection or loan approval in credit examination. Since a configuration of the determination model 10 is similar to that of a machine learning model in the related art, detailed description of the determination model 10 is omitted.

To change a label predicted by the determination model 10 to a desired label, the information processing apparatus 100 determines a perturbation vector 3a, that is, an attribute to be changed 4a and a change amount 5a from the plurality of attributes 11. In the present embodiment, the information processing apparatus 100 determines the attribute to be changed 4a and the change amount 5a for changing the prediction from loan rejection to approval in the credit examination. The number of attributes to be changed 4a may be one or plural. In the example of Fig. 1, the attribute to be changed 4a is the attribute 11-3 "number of unrepaid loans" of the input data 1. The change amount 5a is reduced by two (that is, -2). The determined perturbation vector 3a, that is, the attribute to be changed 4a and the change amount 5a correspond to a suggested action presented to the user.

Fig. 2 is a diagram illustrating an example of the perturbation vector 3a determination process for changing a label. In a coordinate system 30 having each attribute 4a as a coordinate axis, in an example, a first label area 31 is an area in which a label of loan rejection is predicted by the determination model 10. A second label area 32 is an area in which a label of loan approval is predicted by the determination model 10.

The learned determination model 10 determines loan rejection in a situation (instance) x represented by each current attribution value 12. The information processing apparatus 100 determines a (perturbation vector 3a) that can lower a cost value of a cost function c(a) in a collection A of executable perturbation vectors so that f (x + a) = y is satisfied, that is, a target result (that is, the change of label) is possible. A process of determining the perturbation vector 3a may be referred to as a perturbation vector optimization process or an action optimization process.

The cost function c(a) is a function indicating the perturbation vector 3a, that is, a cost such as labor of executing an action. In an example, the cost function c(a) may be an existing cost function used in mixed integer linear optimization problem-based counterfactual explanation techniques such as total log-percentile shift (TLPS) or distribution-aware counterfactual explanation (DACE). Therefore, detailed description of the cost function c(a) and calculation of a cost value of the cost function is omitted. The cost value may be calculated in a process of determining the perturbation vector 3a.

Fig. 3 is a diagram illustrating an example of the action suggestion process when the input data 1 has a defect in the information processing apparatus 100 as an example of the embodiment. Even when the input data 1 has a defect as such, the information processing apparatus 100 according to the embodiment can evaluate the change attribute and the change amount corresponding to an action suggested for obtaining a desired result, and can suggest an action. The defect of the attribution value in the input data 1 includes a state where the attribution value is not input (that is, a blank state), a state where the attribution value is not read, and the like.

In the example illustrated in Fig. 3, the input data 1 lacks the attribution value 12-2 in an item of monthly income as the attribute 11-2 among the plurality of attributes 11-1 to 11-4. The defect in the input data 1 may occur due to various causes. A defect may occur due to an accidental reason such as a portion of the attribution values 12 not being measured due to a failure of a meter or the like. A defect may occur due to an artificial reason such as the user not inputting the attribution value 12 such as monthly income due to concern about inputting privacy information.

When the input data 1 has a defect, it is also conceivable to complement the defect with a single complementary value such as an average value and determine the perturbation vector 3a related the action to be suggested based on the method described in Fig. 2. However, when the single complementary value (complement method) deviates from the omitted original value, it may be difficult to propose an action for changing the prediction result (perturbation vector 3a).

When a portion of the attribution values 12 of the plurality of attributes 11 included in the input data 1 has a defect, the information processing apparatus 100 of the present embodiment generates complementary data 2-1 to 2-6 of a plurality of patterns obtained by complementing the defect in a plurality of ways. The information processing apparatus 100 determines perturbation vectors 3-1 to 3-6 of the complementary data 2-1 to 2-6 to change the labels predicted by the complementary data 2-1 to 2-6 of each of the plurality of patterns by a method similar to that in Fig. 2. The perturbation vectors 3-1 to 3-6 include attributes to be changed 4-1 to 4-6 and change amounts 5-1 to 5-6, respectively. The information processing apparatus 100 may generate sets (may be referred to as a "complement_action set") of the complementary data 2-1 to 2-6 (may be collectively referred to as complementary data 2) and the perturbation vectors 3-1 to 3-6 (may be collectively referred to as perturbation vectors 3). Note that the perturbation vector 3 is an example of perturbation information. The perturbation information is not expressed in a vector format as long as the perturbation information is information including the attributes to be changed and the change amounts among the plurality of attributes of the complementary data for changing the labels predicted by the complementary data of each of the plurality of patterns.

The information processing apparatus 100 determines whether the perturbation vector (for example, perturbation vector 3-1) determined for the complementary data (for example, the complementary data 2-1) of one pattern among the plurality of patterns can change the labels for the complementary data 2-2 to 2-6 of other patterns and obtains a determination result. The information processing apparatus 100 calculates evaluation indexes 8-1 to 8-6 (may be collectively referred to as evaluation indexes 8) based on determination results 7-1 to 7-6 (may be collectively referred to as determination results 7) and cost values 6-1 to 6-6 (may be collectively referred to as cost values 6) associated with each perturbation vector 3.

The information processing apparatus 100 evaluates each perturbation vector 3, in other words, each complement_action set based on the determination result 7. For example, the information processing apparatus 100 evaluates each perturbation vector 3, in other words, each complement_action set, using the determined evaluation index 8 including the cost value 6 and the determination result 7 associated with each perturbation vector 3.

The information processing apparatus 100 selects a predetermined number of complement_action sets from the plurality of complement_action sets based on the evaluation result and outputs one or a plurality of suggested actions.

Fig. 4 is a diagram illustrating a hardware configuration of the information processing apparatus 100 as an example of the embodiment.

For example, as illustrated in Fig. 4, the information processing apparatus 100 includes a processor 121, a memory 122, a storage device 123, a graphic processing device 124, an input interface 125, an optical drive device 126, a device connection interface 127, and a network interface 128 as components. The components 121 to 128 are configured to be able to communicate with each other via a bus 129.

The processor (controller) 121 controls the entire information processing apparatus 100. The processor 121 may be a multiprocessor. The processor 121 may be, for example, any one of a CPU, a micro processing unit (MPU), a digital signal processor (DSP), an application specific integrated circuit (ASIC), a programmable logic device (PLD), and a field programmable gate array (FPGA). The processor 121 may be a combination of two or a plurality of types of elements of CPU, MPU, DSP, ASIC, PLD, and FPGA.

Then, the processor 121 executes a control program (an evaluation program 123a or an action suggestion program), thereby implementing the function as a controller 101 illustrated in Fig. 5.

Note that the information processing apparatus 100 implements a function as an evaluation device or an action suggestion device, for example, by executing a program [the evaluation program 123a or an operating system (OS) program] recorded on a computer-readable non-transitory recording medium.

A program that describes processing contents to be executed by the information processing apparatus 100 can be recorded in various recording media. For example, the program to be executed by the information processing apparatus 100 can be stored in the storage device 123. The processor 121 loads at least a portion of the program in the storage device 123 onto the memory 122 and executes the loaded program.

The program to be executed by the information processing apparatus 100 (processor 121) can be recorded in a non-transitory portable recording medium such as an optical disk 126a, a memory device 127a, and a memory card 127c. The program stored in the portable recording medium is executable, for example, after being installed in the storage device 123 under control of the processor 121. The processor 121 can directly read the program from the portable recording medium and execute the program.

The memory 122 is a storage memory including a read only memory (ROM) and a random access memory (RAM). The RAM of the memory 122 is used as a main storage device of the information processing apparatus 100. At least a portion of the OS program or the control program to be executed by the processor 121 is temporarily stored in the RAM. The memory 122 also stores various pieces of data used in processing by the processor 121.

The storage device 123 is a storage device such as a hard disk drive (HDD), a solid state drive (SSD), or a storage class memory (SCM) and stores various pieces of data. The storage device 123 is used as an auxiliary storage device of the present information processing apparatus 100. The storage device 123 stores the OS program, the control program, and various pieces of data. The control program may include the evaluation program 123a and the like.

Note that a semiconductor storage device such as an SCM or a flash memory can also be used as the auxiliary storage device. The plurality of storage devices 123 may be used to configure redundant arrays of inexpensive disks (RAID).

The storage device 123 may store various pieces of data generated when the controller 101 described below executes each process.

The graphic processing device 124 performs screen display control on an output device such as a monitor 124a. Examples of the graphic processing device 124 include various arithmetic processing devices, for example, an integrated circuit (IC) such as a graphics processing unit (GPU), an APU, a DSP, an ASIC, or an FPGA. The graphic processing device 124 may have a configuration as an accelerator that executes machine learning processing and inference processing using a machine learning model. The graphic processing device 124 may execute at least a portion of the program (the evaluation program 123a or the OS program).

The monitor 124a is connected to the graphic processing device 124. The graphic processing device 124 displays an image on a screen of the monitor 124a according to a command from the processor 121. Examples of the monitor 124a include a display device using a cathode ray tube (CRT) and a liquid crystal display device.

A keyboard 125a and a mouse 125b are connected to the input interface 125. The input interface 125 transmits a signal transmitted from the keyboard 125a or the mouse 125b to the processor 121. Note that the mouse 125b is an example of a pointing device, and other pointing devices can also be used. Examples of other pointing devices include a touch panel, a tablet, a touch pad, and a track ball.

The optical drive device 126 reads data recorded on the optical disk 126a using laser light or the like. The optical disk 126a is a portable non-transitory recording medium on which data is recorded to be readable by reflection of light. Examples of the optical disk 126a include a digital versatile disc (DVD), a DVD-RAM, a compact disc read only memory (CD-ROM), and a CD-recordable (R)/rewritable (RW).

The device connection interface 127 is a communication interface for connecting peripheral devices to the information processing apparatus 100. For example, the memory device 127a and a memory reader/writer 127b can be connected to the device connection interface 127. The memory device 127a is a non-transitory recording medium, for example, a universal serial bus (USB) memory, having a function of communicating with the device connection interface 127. The memory reader/writer 127b writes data into the memory card 127c or reads 9*/ data from the memory card 127c. The memory card 127c is a card-type non-transitory recording medium.

The network interface 128 is connected to a network (not illustrated). The network interface 128 may be connected to the user PC 200, a communication device, another information processing apparatus, or the like via the network.

Fig. 5 is a diagram illustrating a functional configuration of the information processing apparatus 100 as an example of the embodiment. In the information processing apparatus 100, the processor 121 may function as the evaluation device or a perturbation vector output device (action suggestion device) by executing the control program (the evaluation program 123a or the action suggestion program).

As illustrated in Fig. 5, the information processing apparatus 100 includes the controller 101 and a memory unit 110. The controller 101 illustratively includes a complementary data generator 102, a perturbation vector determinator 103, a determinator 104, an evaluator 105, a selector 107, and an outputter 108.

The memory unit 110 is an example of a storage area and stores various pieces of data used by the controller 101. The memory unit 120 may be implemented, for example, by a storage area in one or both of the memory 122 and the storage device 123 illustrated in Fig. 4.

As illustrated in Fig. 5, for example, the memory unit 110 can store area information 111 and cost information 112. The area information 111 is data indicating a class (that is, label) set to an area in the coordinate system 30 (Fig. 2) having coordinates for each type of the attribute 11. The class (that is, label) includes, for example, a positive class and a negative class. The area information 111 may be acquired based on a result of machine learning in the determination model 10. In an example, the area information 111 may include coordinate information for defining the first label area 31 and the second label area 32 in Fig. 2.

The cost information 112 includes the cost value 6 calculated in the process of determining the perturbation vector 3 by the perturbation vector determinator 103.

The function of each unit in Fig. 5 is described with reference to Figs. 6 to 13.

The controller 101 executes various arithmetic processes based on the input data 1. Even when incomplete data having a defect in the attribution value is input, the controller 101 generates the complementary data 2-1 to 2-6 of a plurality of patterns and extracts representative complementary data to perform action suggestion capable of dealing with the incomplete data. In an example, the controller 101 generates a plurality of sets of the complementary data 2-1 to 2-6 and the perturbation vectors 3 in each piece of the complementary data 2-1 to 2-6 and extracts a representative set from the plurality of generated sets. Extraction of a representative set (or complementary data or perturbation vector 3) may be referred to as a "summary". When the accurate attribution value has a defect and is unknown, the controller 101 evaluates and provides the perturbation vector 3 for changing to a desired prediction result.

When a portion of the attribution values 12 in the plurality of attributes 11 included in the input data 1 has a defect, the complementary data generator 102 generates the complementary data 2 of a plurality of patterns obtained by complementing the defect in a plurality of ways.

Fig. 6 is a diagram illustrating an example of a complementary data generation process in the information processing apparatus 100 as an example of the embodiment. The complementary data generator 102 may sample a value for complementing a defect on an attribute space (for example, the coordinate system 30). Information on an obtainable range of a defective attribution value may be stored in the memory unit 110. The complementary data generator 102 samples a plurality of complementary values within the range. In Fig. 6, values of 0 yen, 50,000 yen, 340,000 yen, 580,000 yen, 820,000 yen, and 1,070,000 yen are sampled as complementary values for the attribution value 12-2 of monthly income. The complementary data generator 102 may inclusively sample a plurality of complementary values within the obtainable range. For sampling, in addition to uniform sampling, an existing complement method (for example, a probability model for estimating a defective value from a value of a non-defective attribute) can also be used. Sampling intervals are equal or not equal.

The complementary data generator 102 generates the complementary data 2-1 to 2-6 of a plurality of patterns by replacing the defective attribution value in the input data 1 with a plurality of complementary values. In one defect, the number of pieces 2-1 to 2-6 of the generated complementary data is not limited to the number of Fig. 6.

The perturbation vector determinator 103 determines each perturbation vector 3 including the attribute to be changed 4 and the change amount 5 for changing the predicted label in the complementary data 2 of each of the plurality of patterns.

Fig. 7 is a diagram illustrating an example of an action optimization process in the information processing apparatus as an example of the embodiment. In the action optimization process, the perturbation vector determinator 103 may determine the perturbation vectors 3-1 to 3-6. The processes performed by the perturbation vector determinator 103 are similar to the processes described with reference to Fig. 2 except that the perturbation vectors 3-1 to 3-6 are determined from the plurality of pieces of complementary data 2-1 to 2-6 instead of the input data 1. Therefore, repeated description is omitted. The perturbation vector determinator 103 generates a collection of complement_action sets 9-1 to 9-6 of the number of sets corresponding to the number of pieces of complementary data 2-1 to 2-6.

Fig. 8 is a diagram illustrating an example of the complement_action set 9 and the cost value 6. When the perturbation vector determinator 103 determines the perturbation vectors 3-1 to 3-6, the cost values 6 corresponding to each of the perturbation vectors 3-1 to 3-6 are calculated.

The selector 107 selects a set based on the evaluation indexes 8 from unselected sets in the complement_action sets 9-1 to 9-6 including the perturbation vectors 3-1 to 3-6 corresponding to each piece of the complementary data 2-1 to 2-6 of a plurality of patterns. Note that, when the values of the evaluation indexes 8 are the same values for the plurality of complement_action sets 9, the selector 107 may select a set according to a predetermined standard. For example, the selector 107 may select a set in which the complementary value is close to the average value of the attribution values. In contrast, when the values of the evaluation indexes 8 are the same values and minimum values, the selector 107 may select all the sets indicating the minimum evaluation indexes 8.

Fig. 9 is a diagram illustrating a complement_action set 9 selection process. The selector 107 selects (extracts) a limited number of representative sets from the generated collection of the complement_action sets 9-1 to 9-6. In Fig. 9, the complement_action sets 9-1 to 9-6 include complementary data #1 to #6 (complementary data 2-1 to 2-6) and perturbation vectors #1 to #6, respectively. The perturbation vectors #1 to #6 correspond to recommended actions #1 to #6. In the example of Fig. 9, the selector 107 selects the complement_action sets 9-1, 9-3, and 9-5. The number of sets to be selected is not limited to three and may be determined by an instruction of the user.

Fig. 10 is a diagram illustrating details of the complement_action set 9 selection process. A predetermined number of complement_action sets 9-1 to 9-6 are generated by the perturbation vector determinator 103. The generated complement_action sets 9-1 to 9-6 are input to the selector 107.

When P sets (where P is a natural number) of complement_action sets 9 are selected, the selector 107 selects the P sets of complement_action sets 9 by repeating a step of selecting one set in each stage P times. In Fig. 10, the selector 107 selects three (P = 3) sets of complement_action sets 9 in total by repeating the step of selecting one set in each stage three times.

As illustrated in Fig. 10, in the first stage, the selector 107 selects a set in which the evaluation index 8 can be minimized (in Fig. 10, the complement_action set #1) from all of the complement_action sets #1 to #6 (the complement_action sets 9-1 to 9-6). However, depending on the content of the evaluation index 8, a set in which the evaluation index 8 can be maximized may be selected.

In the second stage, the selector 107 selects a set in which the evaluation index 8 can be minimized (in Fig. 10, the set #5) from the remaining complement_action sets #2 to #6 excluding the already selected complement_action set #1.

In the third stage, the selector 1-7 selects a set in which the evaluation index 8 can be minimized (in Fig. 10, the set #3) from the remaining complement_action sets #2 to #4 and #6 excluding the already selected complement_action sets #1 and #5.

The outputter 108 outputs information on the action recommended based on the selected complement_action set 9 to outside. The outputter 108 may output the information to the monitor 124a or to another computer such as the user PC 200.

The determinator 104 determines whether the perturbation vector (for example, perturbation vector 3-1) determined for the complementary data (for example, the complementary data 2-1) of one pattern among the plurality of patterns can change the labels for the complementary data 2-2 to 2-6 of other patterns and obtains the determination results 7. The determinator 104 may determine the number of pieces of complementary data of other patterns of which the labels can be changed.

Fig. 11 is a diagram illustrating an example of a stage of selecting a first set from the complement_action sets 9. An example in which the determinator 104 determines a perturbation vector (for example, 3-1) determined in complementary data (for example, the complementary data 2-1) of one pattern among a plurality of patterns is described. The perturbation vector 3-1 includes the attribute to be changed 4-1 and the change amount 5-1 indicating that the number of unrepaid loans is reduced by 2 and the number of repayment delays is reduced by 1. Therefore, since each content of the other perturbation vectors 3-2 to 3-6 is satisfied by the perturbation vector 3-1, it is determined that the perturbation vectors 3-1 can change the label for each piece of the complementary data 2-2 to 2-6 of the other patterns.

In the example illustrated in Fig. 11, the perturbation vector 3-1 determined for the complementary data 2-1 may change the labels from loan rejection to approval for all of other pieces of complementary data 2-2 to 2-6. Therefore, the determinator 104 obtains, as the determination result 7, a result indicating that the number of pieces of complementary data 2-2 to 2-6 of other patterns of which labels are not changed depending on the perturbation vector of one pattern (independent number) is 0. In other words, the determinator 104 obtains, as the determination result 7, a result indicating that the total number of dependent complementary data 2-1 to 2-6 of which the labels can be changed (dependent number) is 6. The determinator 104 performs a similar process on each of the perturbation vectors 3-1 to 3-6.

The evaluator 105 evaluates each of the perturbation vectors 3-1 to 3-6 based on the determination result by the determinator 104. "Evaluation" may be evaluation on effectiveness and usefulness for changing the predicted label by the perturbation vectors 3-1 to 3-6 and may mean calculation of the evaluation index 8 regarding the selection order for selecting the perturbation vectors 3-1 to 3-6. The perturbation vectors 3-1 to 3-6 correspond to recommended actions. Therefore, "evaluation" may be evaluation on effectiveness and usefulness for changing the predicted label by the recommended actions and may mean calculation of the evaluation index 8 regarding the selection order for selecting the recommended actions.

In the present embodiment, the evaluation index 8 includes the cost value 6 of the cost function associated with the determined perturbation vectors 3 and the determination result 7. The evaluation index 8 decreases as the number of other patterns of which the labels can be changed increases and as the cost value 6 decreases.

The selector 107 selects a set based on the evaluation indexes 8 from unselected sets in the complement_action sets 9-1 to 9-6 including the perturbation vectors 3-1 to 3-6 corresponding to each piece of the complementary data 2-1 to 2-6 of a plurality of patterns. The selector 107 may use the evaluation index 8 that decreases as the number of other patterns of which the labels can be changed increases and as the cost value 6 decreases. Here, in one stage, the selector 107 may select the complement_action set 9 having the minimum evaluation index 8 among the unselected sets.

However, unlike the present embodiment, the evaluator 105 may calculate an evaluation index that increases as the number of other patterns of which the labels can be changed increases and as the cost value 6 decreases as the evaluation index. Here, in one stage, the selector 107 may select the complement_action set 9 having the maximum evaluation index among the unselected sets.

In one example, the evaluation index is represented by [Total Cost] + [Total Number of Complements to Which Effective Action to Change Label Is Not Taken].

An example in which m (m is a natural number of 1 or more) perturbation vectors $3_{s1}$, $3_{S2}$, ..., and $3_{Sm}$ are selected by the selector 107 is considered. When the cost values associated with the perturbation vectors $3_{s1}$, $3_{S2}$, ..., and $3_{Sm}$ are $C_1$, $C_2$, ..., and $C_m$, and the number (that is, responsible number) of perturbation vectors 3 responsible for the perturbation vectors $3_{s1}$, $3_{S2}$, ..., and $3_{Sm}$ are $T_1$, $T_2$, ..., and $T_m$, the total cost is as follows.

$$\text{Total Cost} = C_1 \cdot T_1 + C_2 \cdot T_2 + C_3 \cdot T_3 \ldots + C_m \cdot T_m$$

Note that the responsible perturbation vector includes the perturbation vector 3 in the complementary data of another pattern of which the label can be changed. However, for other patterns of which the labels of the plurality of perturbation vectors among the selected perturbation vectors $3_{s1}$, $3_{S2}$, ..., and $3_{Sn}$ can be changed, a perturbation vector having a low cost value among the perturbation vectors $3_{s1}$, $3_{s2}$, ..., and $3_{Sn}$ is responsible. The responsible perturbation vector also includes the selected perturbation vector itself.

The total cost when the perturbation vector 3-1 is selected in Fig. 11 is a value obtained by multiplying 0.70 by 6 since the perturbation vector 3-1 having the cost value $C_1$ is responsible for all (six including itself) perturbation vectors 3. In Fig. 11, the number of pieces of complementary data 2-2 to 2-6 of other patterns of which the labels are not changed depending on the perturbation vector of one pattern (independent number) is 0. Thus, the total number of complements for which including no valid action for changing the label is 0. Therefore, the evaluation index when the perturbation vector 3-1 is selected is 4.20.

Similarly, in the total cost when the perturbation vector 3-2 is selected, the perturbation vector 3-2 having the cost value $C_1$ satisfies the attributes to be changed and the change amounts of the perturbation vectors 3-2 to 3-4 and 3-6. Meanwhile, the perturbation vector 3-2 does not satisfy the attributes to be changed and the change amounts of the perturbation vectors 3-1 and 3-5. Therefore, the responsible number when the perturbation vector 3-2 is selected is 4, and the total cost is 2.44 by multiplying 0.61 by 4. The total number of complements including no valid action for changing the label is 2. Therefore, the evaluation index when the perturbation vector 3-2 is selected is 4.44.

Hereinafter, the evaluator 105 similarly calculates the evaluation indexes 8 when the perturbation vectors 3-3, 3-4, 3-5, and 3-6 are adopted, respectively. The evaluator 105 selects the perturbation vector 3-1 (that is, selects the complement_action set 9-1) by which the evaluation index 8 can be minimized when selected.

Fig. 12 is a diagram illustrating an example of a stage of selecting a second set from the complement_action sets 9 subsequent to Fig. 11. The selector 107 selects a set from the unselected sets based on the evaluation index 8. When the selector 107 selects 3-5 in addition to the already selected perturbation vector 3-1, the evaluator 105 calculates the evaluation index as follows.

As a determination result, the determinator 104 determines that the label can be changed in the other piece of complementary data 2-6 depending on the perturbation vector 3-5 in the complementary data 2-5. The perturbation vector 3-5 itself and the perturbation vector 3-6 can change the labels dependently by the already selected perturbation vector 3-1. However, since the cost value 6 of the perturbation vector 3-5 is lower than that of the perturbation vector 3-1, the perturbation vector 3-5 is responsible for the perturbation vector 3-5 itself and the perturbation vector 3-6.

The responsible number of the perturbation vector 3-5 is 2, and the responsible number of the perturbation vector 3-1 is reduced to 4. The evaluator 105 calculates a total cost when 3-5 is selected in addition to the perturbation vector 3-1 as $0.70 \times 4 + 0.30 \times 2 = 3.40$. Since the selected perturbation vectors 3-1 and 3-5 can satisfy the conditions of all of the perturbation vectors 3, the total number of complements including no valid action for changing the label is 0. Therefore, the evaluation index when the perturbation vectors 3-1 and 3-5 are selected is 3.40.

Similarly, when the selector 107 selects 3-2 in addition to the already selected perturbation vector 3-1, the evaluator 105 calculates the evaluation index as follows.

As a determination result, the determinator 104 determines that the labels can be changed in the other pieces of complementary data 2-3, 2-4, and 2-6 depending on the perturbation vector 3-2 in the complementary data 2-2. The perturbation vector 3-2 itself and the perturbation vectors 3-3, 3-4, and 3-6 can change the labels dependently by the already selected perturbation vector 3-1. However, since the cost value of the perturbation vector 3-2 is lower than that of the perturbation vector 3-1, the perturbation vector 3-2 is responsible for the perturbation vectors 3-2, 3-3, 3-4, and 3-6.

The responsible number of the perturbation vector 3-2 is 4, and the responsible number of the perturbation vector 3-1 is 2. The total number of complements including no valid action for changing the label is 0. As a result, the evaluation index when the perturbation vectors 3-1 and 3-2 are selected is $0.70 \times 2 + 0.61 \times 4 = 3.84$. Similarly, the evaluation index when the perturbation vector 3-3 is selected in addition to the already selected perturbation vector 3-1 is 3.8. An evaluation index when the perturbation vector 3-4 is selected in addition to the perturbation vector 3-1 is 3.88.

Note that, when the selector 107 selects the perturbation vector 3-6 in addition to the already selected perturbation vector 3-1, the evaluator 105 calculates the evaluation index as follows.

As a determination result, the determinator 104 does not change the labels in all of the other pieces of complementary data 2-1 to 2-5 depending on the perturbation vector 3-6 in the complementary data 2-6. Therefore, the perturbation vector 3-6 is responsible for the perturbation vector 3-6 itself, and the perturbation vector 3-1 is responsible for the other perturbation vectors 3-1 to 3-5. The responsible number of the perturbation vector 3-6 is 1, and the responsible number of the perturbation vector 3-1 is 5. As a result, the evaluation index when the perturbation vectors 3-1 and 3-6 are selected is $0.70 \times 5 + 0.20 \times 1 = 3.70$.

When performing further selection in addition to the already selected perturbation vector 3-1, the selector 107 selects the perturbation vector 3-5 (that is, selects the complement_action set 9-5) with which the evaluation index 8 can be minimized.

Fig. 13 is a diagram illustrating an example of a stage of selecting a third set from the complement_action sets 9 subsequent to Fig. 12. Also in Fig. 13, the determinator 104 determines whether the perturbation vector 3 determined in the complementary data 2 of one pattern among the plurality of patterns can change the labels of the complementary data 2 of other patterns among the plurality of patterns.

Then, the evaluator 105 evaluates the perturbation vector 3 based on the determination result 7. When performing further selection in addition to the already selected perturbation vectors 3-1 and 3-5, the selector 107 selects the perturbation vector 3-3 (that is, selects the complement_action set 9-3) with which the evaluation index 8 can be minimized.

According to the processes illustrated in Figs. 11 to 13, the information processing apparatus 100 does not evaluate the plurality of perturbation vectors 3 only by the cost value 6. The information processing apparatus 100 evaluates the perturbation vector 3 considering whether the perturbation vector 3 determined in the complementary data of one pattern among the plurality of patterns can change the labels of the complementary data of other patterns among the plurality of patterns. As a result, it is possible to evaluate the perturbation vector 3 (that is, the attribute to be changed 4 and the change amount 5) corresponding to an action suggested for obtaining a desired result even for incomplete data having a defect. Since the perturbation vector 3 corresponding to the suggested action can be selected based on such an evaluation, a suggested action can be proposed to the user even when the input data 1 has a defect.

(B) Operation

The action suggestion process in the information processing apparatus 100 as an example of the embodiment configured as described above is described with reference to a flowchart illustrated in Fig. 14 (steps S1 to S13).

In step S1, the controller 101 of the information processing apparatus 100 receives the input data 1 from the user PC 200 or the like via a network line (step S1).

In step S2, the controller 101 determines whether a portion of the attribution value 12 of the input data 1 has a defect.

As a determination result, when the input data 1 does not have a defect (see NO route in step S2), the process proceeds to step S3.

In step S3, the perturbation vector determinator 103 calculates the perturbation vector 3a for changing the label predicted by the input data 1 (step S3). The perturbation vector 3a includes at least one attribute to be changed 4a selected from the attributes 11 of the input data 1 and the change amount 5a for the attribute 4a.

In step S4, the outputter 108 outputs information on an encouraged action corresponding to the calculated perturbation vector 3a.

Meanwhile, as a determination result, when the input data 1 has a defect (see YES route in step S2), the process proceeds to step S5.

In step S5, the complementary data generator 102 generates the complementary data 2 of a plurality of patterns obtained by complementing the defect in a plurality of ways.

In step S6, the perturbation vector determinator 103 determines each perturbation vector 3 including the attribute to be changed 4 and the change amount 5 for changing the predicted label in the complementary data 2 of each of the plurality of patterns. In other words, the perturbation vector determinator 103 generates a collection of the complement_action sets 9 that are sets including the complementary data 2 and the perturbation vector 3.

In step S7, the selector 107 acquires one set from the complement_action sets 9 including unselected complementary data 2 and the perturbation vector 3 as a selection candidate.

In step S8, the determinator 104 determines the number of pieces of complementary data of which labels can be changed by a perturbation vector (for example, the perturbation vector 3-1) of complementary data (for example, the complementary data 2-1) of a set acquired as a selection candidate for the complementary data 2-2 to 2-6 of other patterns.

In step S9, the evaluator 105 calculates the evaluation index 8 in the process of evaluating the perturbation vectors 3-1 to 3-6. The evaluation index 8 includes the cost value 6 of the cost function associated with the perturbation vector 3 of the acquired set and the determination result 7 of the number of changeable pieces. In an example, the evaluation index 8 is an index that decreases as the number of other patterns of which the label can be changed increases and as the cost value 6 decreases.

In step S10, the selector 107 checks whether a set unacquired as a selection candidate exists.

When a set unacquired as a selection candidate exists (see YES route of step S10), the process proceeds to step S7.

Meanwhile, when a set unacquired as a selection candidate does not exist (see NO route of step S10), the process proceeds to step S11. In other words, the fact that a set unacquired as the selection candidate does not exist means that all the unselected sets are acquired as the selection candidates.

In step S11, the selector 107 selects one complement_action set 9 that is a set of the complementary data 2 and the perturbation vector 3 (estimated action) that can improve the evaluation index 8 most among the selection candidates.

In step S12, the selector 107 determines whether a predetermined number of complement_action sets 9 is already selected.

When the selector 107 did not yet select the predetermined number of complement_action sets 9 (see NO route in step S12), the process proceeds to step S7.

Meanwhile, when the selector 107 already selected the predetermined number of complement_action sets 9 (see YES route in step S12), the process proceeds to step S13.

In step S13, the outputter 108 outputs the predetermined number of selected complement_action sets 9, that is, sets of the complementary data 2 and the perturbation vector 3. The outputter 108 outputs information on a suggested action corresponding to the selected perturbation vector 3 together with a complement method (a complementary value or the like).

Fig. 15 is a diagram illustrating an example of suggesting an action of changing prediction from loan rejection to approval in credit examination when the input data has a defect. In Fig. 15, the technology of the embodiment is applied to action suggestion of credit examination when the value of monthly income has a defect.

The original monthly income was 3,000 dollars, but since the user did not input the monthly income for privacy or the like, a defect occurred. The information processing apparatus 100 selected and outputted three complement_action sets 9-1b, 9-2b, and 9-3b in total indicated by reference signs (a), (b), and (c). As illustrated in Figs. 11 to 13, the three sets were not selected based only on the cost value 6 associated with the perturbation vector 3 but were selected considering label change possibilities in complementary data of other patterns.

Reference sign (a) indicates a case of complementary data 2-1b in which the information processing apparatus 100 complements the amount of monthly income with a complementary value of 0 dollars (a range of 0 dollars or more and 0 dollars or less) in the input data 1 having a defect in the amount of monthly income. Here, the selector 107 selected a perturbation vector 3-1b of "number of repayment delays for 30 to 59 days is reduced by 1, and number of unrepaid loans is reduced by 1". In other words, the selector 107 selected the complement_action set 9-1b including the complementary data 2-1b and the perturbation vector 3-1b.

Reference sign (b) indicates a case of complementary data 2-2b in which the information processing apparatus 100 complements the amount of monthly income with a complementary value of 8,227 dollars (a range of 8,227 dollars or more and 10,750 dollars or less) in the input data 1 having a defect in the amount of monthly income. Here, the selector 107 selected a perturbation vector 3-2b of "number of unrepaid loans is reduced by 4". In other words, the selector 107 selected the complement_action set 9-2b including the complementary data 2-2b and the perturbation vector 3-2b.

Reference sign (c) indicates a case of complementary data 2-3b in which the information processing apparatus 100 complements the amount of monthly income with a complementary value of 3,471 dollars (a range of 553 dollars or more and 5,831 dollars or less) in the input data 1 having a defect in the amount of monthly income. Here, the selector 107 selected a perturbation vector 3-3b of "number of repayment delays for 30 to 59 days is reduced by 1". In other words, the selector 107 selected the complement_action set 9-3b including the complementary data 2-3b and the perturbation vector 3-3b.

The information processing apparatus 100 presents three types of action suggestion on the screen of the user PC 200 based on the selected complement_action sets 9-1b, 9-2b, and 9-3b. In (a) first set (the complement method of 0 dollars) and (c) third set (the complement method of 3,471 dollars (553 dollars or more and 5,831 dollars or less)), the actual attribution value of 3,000 dollars satisfies the range of the complementary value. Therefore, the user can perform the action encouraged in (a) or (c) to change the label of loan rejection to the label of loan approval.

Meanwhile, in (b) second set (the complement method of 8,227 dollars (8,227 dollars or more and 10,750 dollars or less)), the actual attribution value of 3,000 dollars does not satisfy the range of the complementary value. Therefore, even if the user performs the action encouraged in (b), the label of loan rejection is not changed to the label of loan initial recognition. However, as illustrated in Fig. 15, by presenting not only the action (in other words, the perturbation vector 3) but also the complement method (the complementary value or the range of the complementary value), the user themselves could select an appropriate action.

Also in the embodiment illustrated in Fig. 15, it was possible to suggest an action capable of changing a label on input data having a defect. The information processing apparatus 100 could suggest about 3 to 4 appropriate complement_action sets 9 within 1 minute by application of action suggestion in which prediction is changed from loan rejection to approval in credit examination. In the benchmark experiment, for the input data 1 having a defect, a rate at which action suggestion in which prediction is changed from loan rejection to approval in credit examination can be provided to the user was improved from 37% to 96%.

In Figs. 1 to 15, the information processing apparatus 100 according to the embodiment is mainly described as an example of a case of action suggestion in which prediction is changed from loan rejection to approval. However, the information processing apparatus 100 according to the present embodiment is not limited thereto.

Fig. 16 is a diagram illustrating an example of the embodiment in action suggestion for improving a health condition. In Fig. 16, input data 1a has attributes including items such as age, blood sugar level, and body fat ratio. In Fig. 16, "blood sugar level" as an attribution value has a defect. Also here, the information processing apparatus 100 may generate complementary data of a plurality of patterns by substituting a plurality of complementary values for a defective value. The information processing apparatus 100 generates a plurality of sets of complement_action sets 9-1a to 9-Na (#1 to #N) by determining a perturbation vector for each of the complementary data of the plurality of patterns. The information processing apparatus 100 selects complement_action sets #j to #k considering the determination result 7 on whether the perturbation vector 3 determined in the complementary data of one pattern among the plurality of patterns can change the labels of the complementary data of other patterns among the plurality of patterns. The information processing apparatus 100 may output the selected complement_action sets #j to #k. The information processing apparatus 100 may present suggested actions 14-j to 14-k corresponding to the complement_action sets #j to #k to the user terminal 200 or the like.

Note that, although a case where the information processing apparatus 100 includes the selector 107 and the outputter 108 is described, there is a case where the information processing apparatus 100 does not include the selector 107 and the outputter 108. Also here, the embodiment can be used as an evaluation technique capable of evaluating a change attribute and a change amount corresponding to an action suggested for obtaining a desired result for data having a defect. The evaluated change attribute and change amount can also be used by other devices for various analyses and the like.

(C) Effects

According to the information processing apparatus 100 as an example of the present embodiment, when a portion of the attribution values 12 of the plurality of attributes 11 included in the input data 1 has a defect, the complementary data generator 102 generates the complementary data 2 of a plurality of patterns obtained by complementing the defect in a plurality of ways. As a result, the perturbation vector determinator 103 determines the perturbation vectors 3 (perturbation information) including the attributes to be changed 4 and the change amounts 5 among the plurality of attributes of the complementary data for changing the labels predicted by the complementary data 2 of each of the plurality of patterns. The evaluator 105 evaluates the perturbation vector 3 based on the determination result 7 on whether the perturbation vector 3 determined in the complementary data of one pattern among the plurality of patterns can change the labels of the complementary data 2 of other patterns among the plurality of patterns.

As a result, it is possible to evaluate a change attribute and a change amount corresponding to an action suggested for obtaining a desired result for data having a defect. The evaluation system can be improved as compared with when one piece of complementary data is generated by replacing a defective value with a simple average value or the like.

Since the perturbation vector 3 can be evaluated considering the determination result 7 on whether the labels can be changed for other patterns among the plurality of patterns, it is possible to increase tolerance for a range in which an actual defective value may be obtainable when it is difficult to predict a defective value. Accordingly, a possibility of selecting a change attribute and a change amount with which the predicted label can be changed increases.

Even when an attribution value that a user did not want to disclose is not disclosed, the information processing apparatus 100 can evaluate the perturbation vector 3 of which the label can be changed.

The evaluator 105 evaluates the perturbation vector 3 using the evaluation index 8. The evaluation index 8 includes the cost value 6 of the cost function associated with the perturbation vector 3 and the determination result 7. The evaluation index 8 is changed to either an increase or a decrease as the number of other patterns of which the labels can be changed increases and as the cost value 6 decreases.

As a result, it is possible to implement evaluation on the perturbation vector 3 according to usage considering a balance between a viewpoint of enhancing tolerance for a range in which an actual defective value may be obtainable and a viewpoint of lowering the cost value 6.

The selector 107 repeats selection of sets among unselected sets based on the evaluation index 8 from the complement_action sets 9 of the perturbation vectors 3 corresponding to the complementary data 2 of the plurality of patterns, respectively, until a predetermined number of sets are selected. Therefore, a plurality of complement_action sets 9 can be selected. The number of types of actions selected based on evaluation can be increased. Therefore, more options of actions to be presented to the user who receives presentation can be provided. It is possible to provide not only an action of each option but also a complement method such as a complementary value or a range of the complementary value.

The outputter 108 outputs information on the action recommended based on the selected set to outside.

Therefore, it is possible to present a recommended action even for incomplete data having a defect in the input data 1. The user can obtain an action suggested for changing the label without disclosing an attribution value that a user does not want to disclose for privacy or the like.

As effects in an assumed business scene, the method of the present embodiment can be applied to all fields in which a determination model is used related to a user's decision-making task such as health, management, transaction, and loan approval. In all fields related to the user's decision-making task, it is possible to provide an action guideline for leading the user to a desired determination while privacy of the user or the like is considered. As a result, it is possible to help the user make a decision.

(D) Others

The disclosed technology is not limited to the above-described embodiments, and various modifications can be made without departing from the gist of the present embodiment.

For example, each configuration and each process of the present embodiment can be selected as wanted or may be appropriately combined.

Reference Signs List

| | |
|---|---|
| 1 | Input data |
| 2, 2-1 to 2-6, 2-1b to 2-3b | Complementary data |
| 3a, 3, 3-1 to 3-6, 3-1b to 3-3b | Perturbation vector |
| 4a, 4, 4-1 to 4-6 | Attribute to be changed |
| 5a, 5, 5-1 to 5-6 | Change amount |
| 6, 6-1 to 6-6 | Cost value |
| 7, 7-1 to 7-6 | Determination result |
| 8, 8-1 to 8-6 | Evaluation indicator |
| 9, 9-1 to 9-6, 9-1a to 9-Na, 9-1b to 9-3b | Complement_action set |
| 10 | Determination model |
| 14-j to 14-k | Suggested action |
| 31 | First label area |
| 32 | Second label area |
| 11, 11-1 to 11-4 | Attribute |
| 12, 12-1 to 12-4 | Attribution value |
| 100 | Information processing apparatus |
| 101 | Controller |
| 102 | Complementary data generator |
| 103 | Perturbation vector determinator |
| 104 | Determinator |
| 105 | Evaluator |
| 107 | Selector |
| 108 | Outputter |
| 110 | Memory unit |
| 111 | Area information |

| | |
|---|---|
| 112 | Cost information |
| 121 | Processor |
| 122 | Memory |
| 123 | Storage device |
| 123a | Evaluation program |
| 124 | Graphic processing device |
| 124a | Monitor |
| 125 | Input interface |
| 125a | Keyboard |
| 125b | Mouse |
| 126 | Optical drive device |
| 126a | Optical disk |
| 127 | Device connection interface |
| 127a | Memory device |
| 127b | Memory reader/writer |
| 127c | Memory card |
| 128 | Network interface |
| 129 | Bus |
| 200 | User PC |

## Claims

**1.** An evaluation program causing a computer to execute processing comprising:

generating, when a portion of values of a plurality of attributes included in input data has a defect, complementary data of a plurality of patterns obtained by complementing the defect in a plurality of ways;
determining perturbation information including an attribute to be changed and a change amount from among the plurality of attributes of complementary data in order to change a label predicted by each item of the complementary data of the plurality of patterns; and
evaluating the perturbation information based on a determination result as to whether the perturbation information determined in the complementary data of one pattern among the plurality of patterns can change the label also with respect to the complementary data of another pattern among the plurality of patterns.

**2.** The evaluation program according to claim 1,

causing a computer to execute a process comprising
evaluating the perturbation information using an evaluation index that includes a cost value of a cost function associated with the determined perturbation information and the determination result and changes to either an increase or a decrease as the number of other patterns determined to be able to change the label increases, and as the cost value decreases, in the process of evaluating the perturbation information.

**3.** The evaluation program according to claim 2

causing a computer to execute a process comprising
repeating selection of sets based on the evaluation index from among unselected sets, with respect to sets of the perturbation information corresponding to the complementary data of the plurality of patterns, respectively, until a predetermined number of sets are selected.

**4.** The evaluation program according to claim 3

causing a computer to execute a process comprising
outputting information about an action recommended based on the selected set to the outside.

**5.** A computer-implemented evaluation method comprising a process executed by a computer:

generating, when a portion of values of a plurality of attributes included in input data has a defect, complementary data of a plurality of patterns obtained by complementing the defect in a plurality of ways;
determining perturbation information including an attribute to be changed and a change amount from among the plurality of attributes of complementary data in order to change a label predicted by each item of the complementary data of the plurality of patterns; and
evaluating the perturbation information based on a determination result as to whether the perturbation information determined in the complementary data of one pattern among the plurality of patterns can change the label also with respect to the complementary data of another pattern among the plurality of patterns.

**6.** The computer-implemented evaluation method according to claim 5

causing a computer to execute a process comprising
evaluating the perturbation information using an evaluation index that includes a cost value of a cost function associated with the determined perturbation information and the determination result and changes to either an increase or a decrease as the number of other patterns determined to be able to change the label increases, and as the cost value decreases, in the process of evaluating the perturbation information.

**7.** The computer-implemented evaluation method according to claim 6

causing a computer to execute a process comprising
repeating selection of sets based on the evaluation index from among unselected sets, with respect to sets of the perturbation information corresponding to the complementary data of the plurality of patterns, respectively, until a predetermined number of sets are selected.

**8.** The computer-implemented evaluation method according to claim 7

causing a computer to execute a process comprising
outputting information about an action recommended based on the selected set to the outside.

**9.** An information processing apparatus comprising a controller being configured to:

generating, when a portion of values of a plurality of attributes included in input data has a defect, complementary data of a plurality of patterns obtained by complementing the defect in a plurality of ways;
determining perturbation information including an attribute to be changed and a change amount from among the plurality of attributes of complementary data in order to change a label predicted by each item of the complementary data of the plurality of patterns; and
evaluating the perturbation information based on a determination result as to whether the perturbation information determined in the complementary data of one pattern among the plurality of patterns can change the label also with respect to the complementary data of another pattern among the plurality of patterns.

**10.** The information processing apparatus according to claim 9,
wherein the controller, in the process of evaluating the perturbation information, is configured to:
evaluate the perturbation information using an evaluation index that includes a cost value of a cost function associated with the determined perturbation information and the determination result and changes to either an increase or a decrease as the number of other patterns determined to be able to change the label increases, and as the cost value decreases,.

**11.** The information processing apparatus according to claim 10,
wherein the controller is configured to:
repeats selection of sets based on the evaluation index from among unselected sets, with respect to sets of the perturbation information corresponding to the complementary data of the plurality of patterns, respectively, until a predetermined number of sets are selected.

**12.** The information processing apparatus according to claim 11,
wherein the controller is configured to:
output information about an action recommended based on the selected set to the outside.

FIG.1

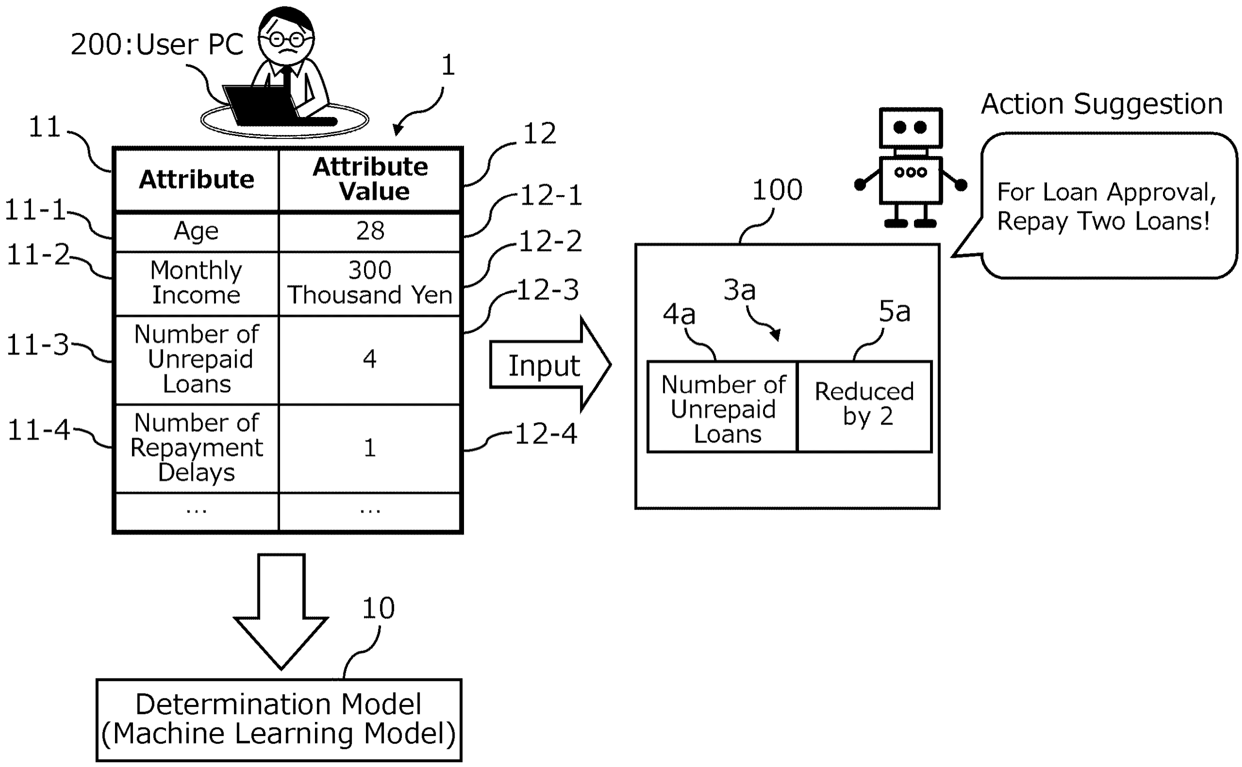
200:User PC
1
11
12
Attribute
Attribute Value
11-1
Age
28
12-1
11-2
Monthly Income
300 Thousand Yen
12-2
12-3
11-3
Number of Unrepaid Loans
4
11-4
Number of Repayment Delays
1
12-4
...
...
Input
10
Determination Model (Machine Learning Model)
100
Action Suggestion
For Loan Approval, Repay Two Loans!
3a
4a
5a
Number of Unrepaid Loans
Reduced by 2

FIG.2

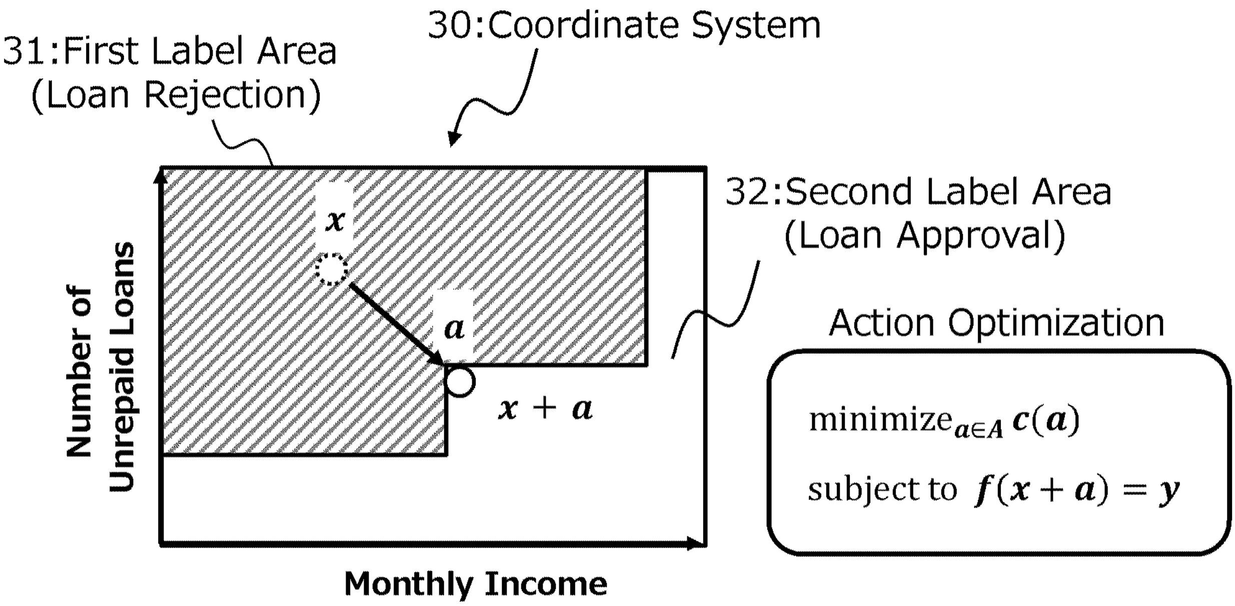
31:First Label Area
(Loan Rejection)
30:Coordinate System
32:Second Label Area
(Loan Approval)
x
a
x + a
Number of Unrepaid Loans
Monthly Income
Action Optimization
minimize$_{a \in A}$ c(a)
subject to f(x + a) = y

FIG.3

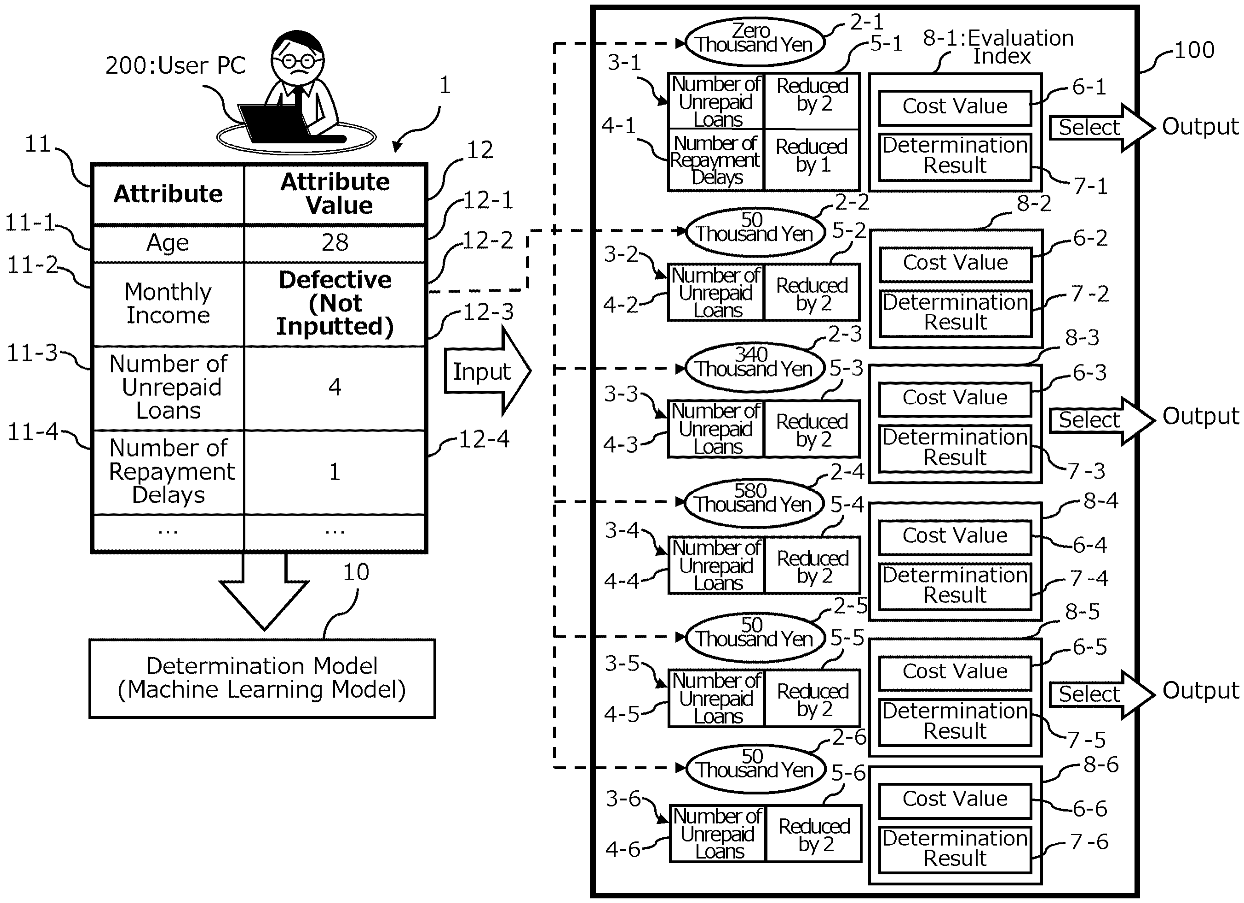
200:User PC
1
11
12
Attribute
Attribute Value
11-1
Age
28
12-1
11-2
Monthly Income
Defective (Not Inputted)
12-2
11-3
Number of Unrepaid Loans
4
12-3
11-4
Number of Repayment Delays
1
12-4
...
...
10
Determination Model (Machine Learning Model)
Input
100
2-1
Zero Thousand Yen
5-1
8-1:Evaluation Index
3-1
Number of Unrepaid Loans
Reduced by 2
4-1
Number of Repayment Delays
Reduced by 1
6-1
Cost Value
Determination Result
7-1
Select
Output
2-2
50 Thousand Yen
5-2
8-2
3-2
4-2
Number of Unrepaid Loans
Reduced by 2
6-2
Cost Value
Determination Result
7-2
2-3
340 Thousand Yen
5-3
8-3
3-3
4-3
Number of Unrepaid Loans
Reduced by 2
6-3
Cost Value
Determination Result
7-3
Select
Output
2-4
580 Thousand Yen
5-4
8-4
3-4
4-4
Number of Unrepaid Loans
Reduced by 2
6-4
Cost Value
Determination Result
7-4
2-5
50 Thousand Yen
5-5
8-5
3-5
4-5
Number of Unrepaid Loans
Reduced by 2
6-5
Cost Value
Determination Result
7-5
Select
Output
2-6
50 Thousand Yen
5-6
8-6
3-6
4-6
Number of Unrepaid Loans
Reduced by 2
6-6
Cost Value
Determination Result
7-6

FIG.4

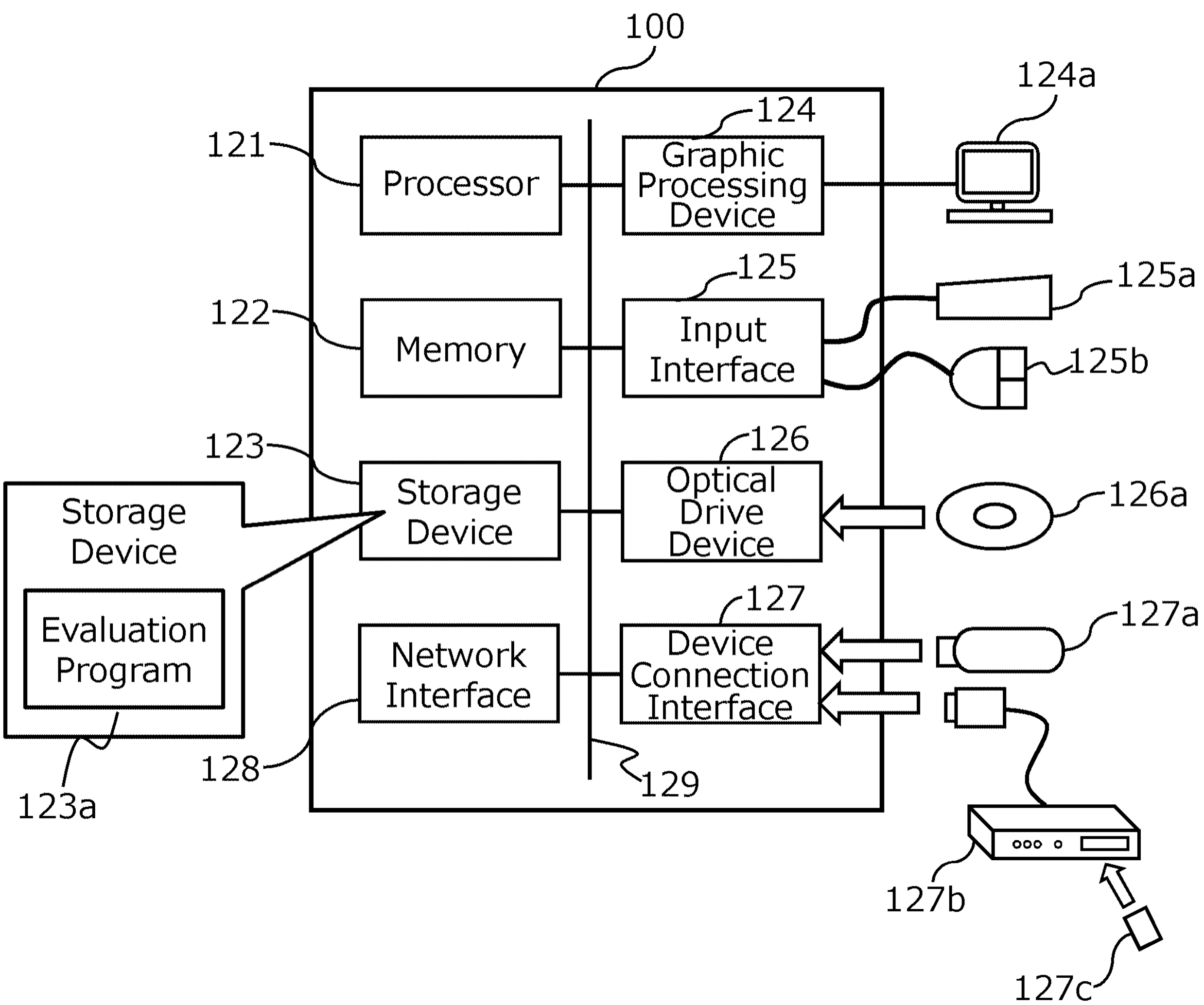
100
121
Processor
122
Memory
123
Storage Device
Storage Device
Evaluation Program
123a
Network Interface
128
124
Graphic Processing Device
124a
125
Input Interface
125a
125b
126
Optical Drive Device
126a
127
Device Connection Interface
127a
127b
127c
129

FIG.5

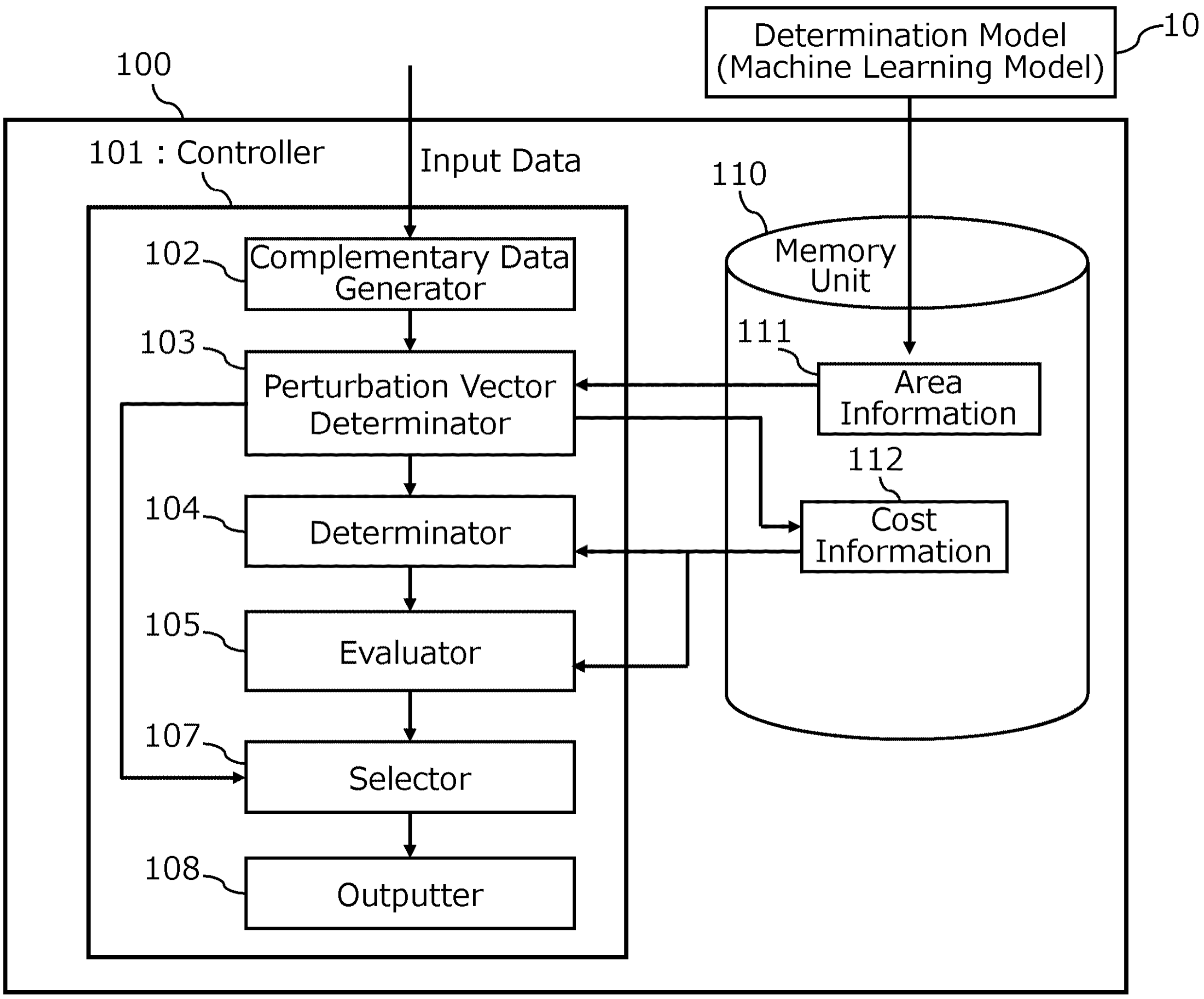
Determination Model
(Machine Learning Model)
10
100
101 : Controller
Input Data
110
Memory
Unit
102
Complementary Data
Generator
103
Perturbation Vector
Determinator
111
Area
Information
112
Cost
Information
104
Determinator
105
Evaluator
107
Selector
108
Outputter

FIG.6

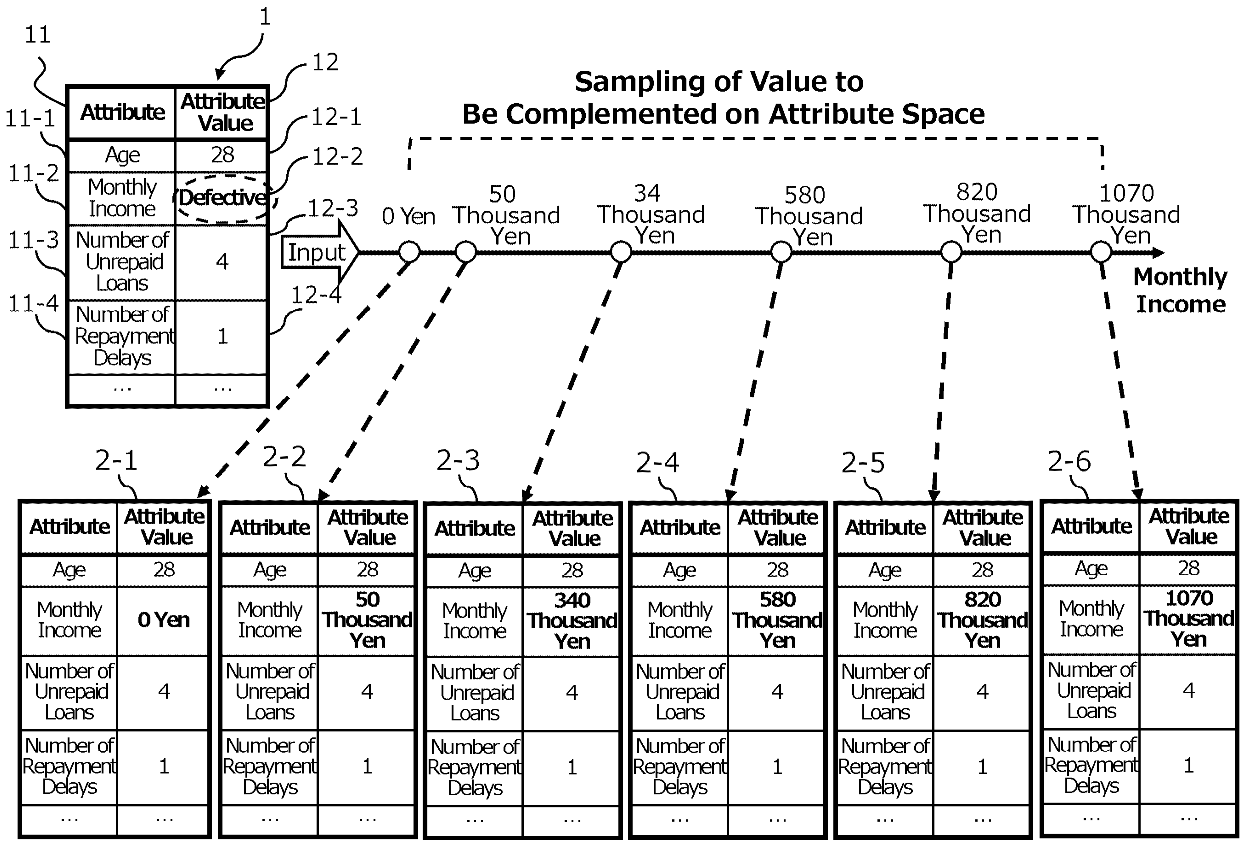
1
11
12
11-1
11-2
11-3
11-4
12-1
12-2
12-3
12-4
Attribute
Attribute Value
Age
28
Monthly Income
Defective
Number of Unrepaid Loans
4
Number of Repayment Delays
1
Input
Sampling of Value to Be Complemented on Attribute Space
0 Yen
50 Thousand Yen
34 Thousand Yen
580 Thousand Yen
820 Thousand Yen
1070 Thousand Yen
Monthly Income
2-1
2-2
2-3
2-4
2-5
2-6
340 Thousand Yen

FIG.7

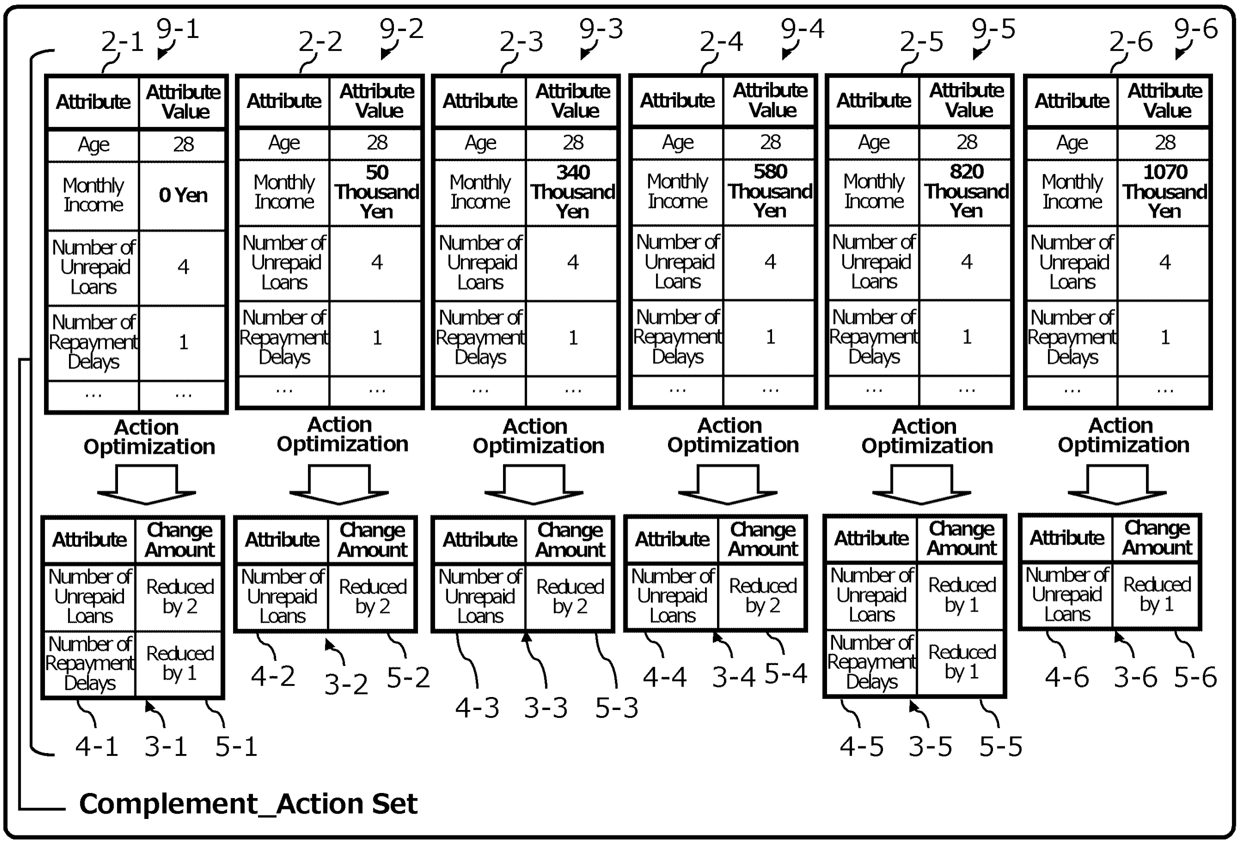
2-1 9-1 2-2 9-2 2-3 9-3 2-4 9-4 2-5 9-5 2-6 9-6
Attribute | Attribute Value
Age | 28
Monthly Income | 0 Yen
Monthly Income | 50 Thousand Yen
Monthly Income | 340 Thousand Yen
Monthly Income | 580 Thousand Yen
Monthly Income | 820 Thousand Yen
Monthly Income | 1070 Thousand Yen
Number of Unrepaid Loans | 4
Number of Repayment Delays | 1
... | ...
Action Optimization
Attribute | Change Amount
Number of Unrepaid Loans | Reduced by 2
Number of Unrepaid Loans | Reduced by 1
Number of Repayment Delays | Reduced by 1
4-1 3-1 5-1
4-2 3-2 5-2
4-3 3-3 5-3
4-4 3-4 5-4
4-5 3-5 5-5
4-6 3-6 5-6
Complement_Action Set

FIG.8

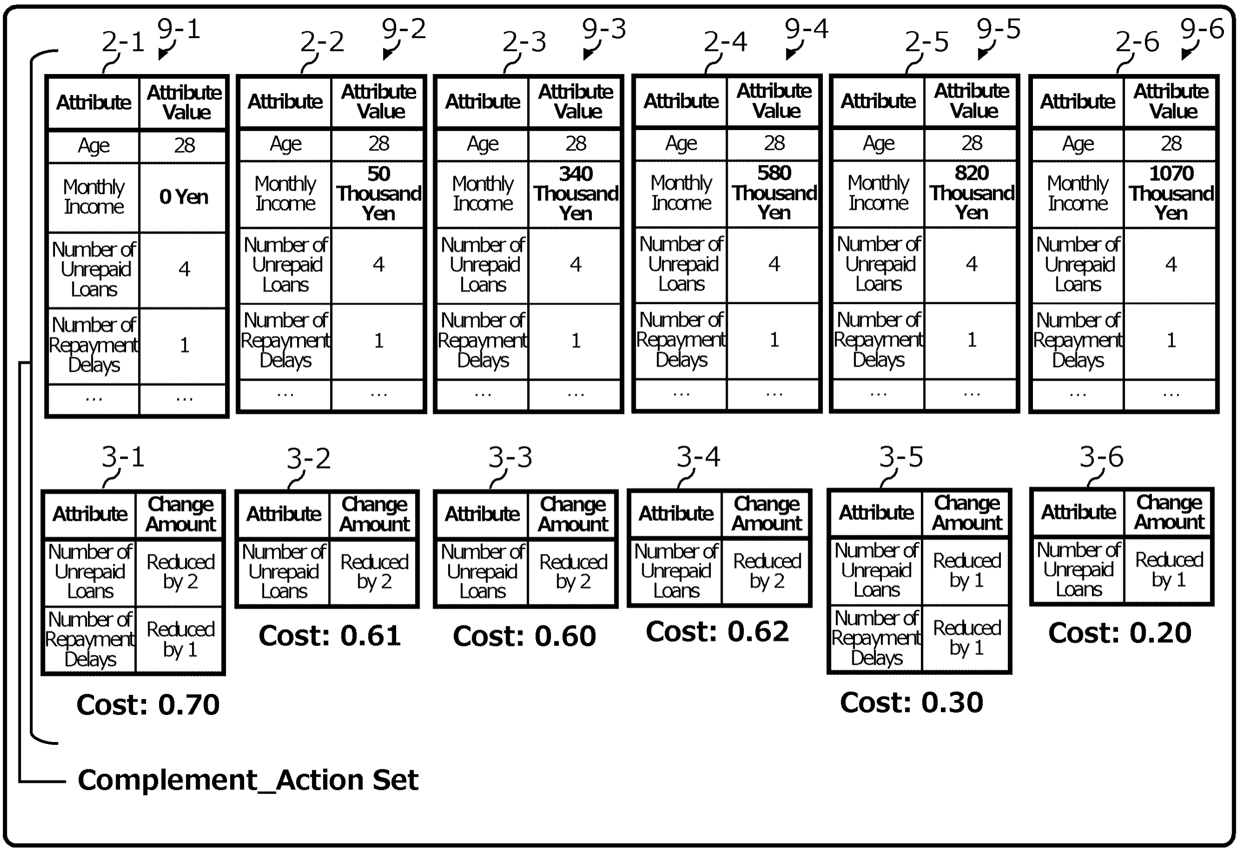
2-1
9-1
2-2
9-2
2-3
9-3
2-4
9-4
2-5
9-5
2-6
9-6
Attribute
Attribute Value
Age
28
Monthly Income
0 Yen
50 Thousand Yen
340 Thousand Yen
580 Thousand Yen
820 Thousand Yen
1070 Thousand Yen
Number of Unrepaid Loans
4
Number of Repayment Delays
1
...
3-1
3-2
3-3
3-4
3-5
3-6
Change Amount
Reduced by 2
Reduced by 1
Cost: 0.70
Cost: 0.61
Cost: 0.60
Cost: 0.62
Cost: 0.30
Cost: 0.20
Complement_Action Set

FIG.9

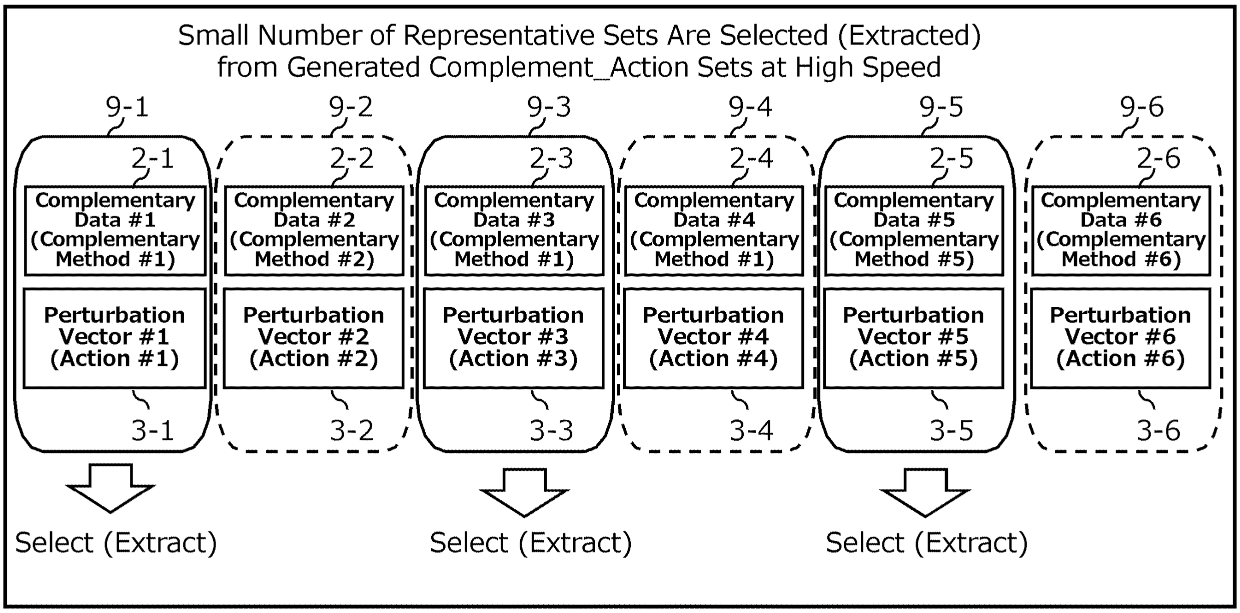
Small Number of Representative Sets Are Selected (Extracted)
from Generated Complement_Action Sets at High Speed
9-1
9-2
9-3
9-4
9-5
9-6
2-1
2-2
2-3
2-4
2-5
2-6
Complementary Data #1 (Complementary Method #1)
Complementary Data #2 (Complementary Method #2)
Complementary Data #3 (Complementary Method #1)
Complementary Data #4 (Complementary Method #1)
Complementary Data #5 (Complementary Method #5)
Complementary Data #6 (Complementary Method #6)
Perturbation Vector #1 (Action #1)
Perturbation Vector #2 (Action #2)
Perturbation Vector #3 (Action #3)
Perturbation Vector #4 (Action #4)
Perturbation Vector #5 (Action #5)
Perturbation Vector #6 (Action #6)
3-1
3-2
3-3
3-4
3-5
3-6
Select (Extract)
Select (Extract)
Select (Extract)

FIG.10

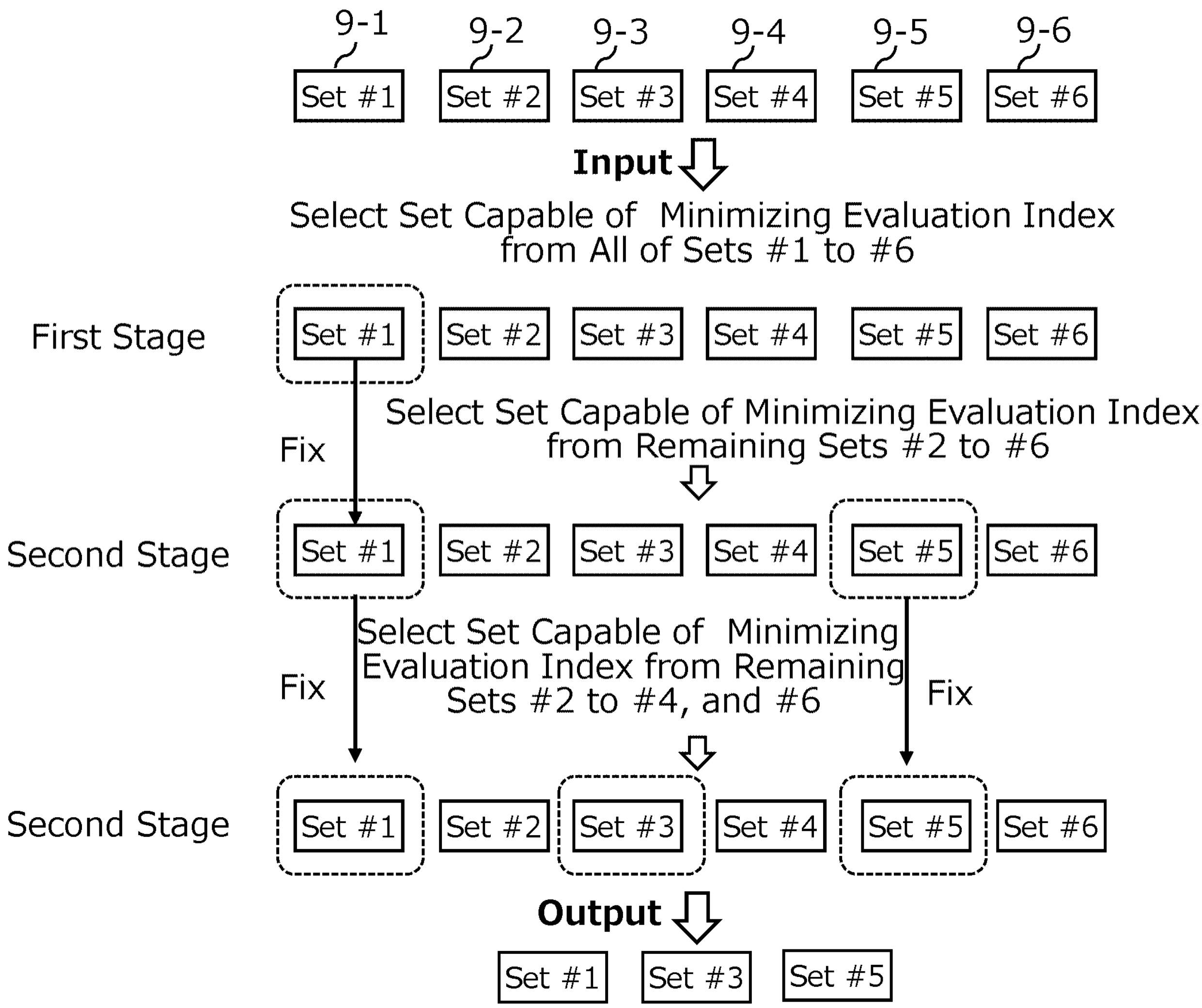
9-1
9-2
9-3
9-4
9-5
9-6
Set #1
Set #2
Set #3
Set #4
Set #5
Set #6
Input
Select Set Capable of Minimizing Evaluation Index from All of Sets #1 to #6
First Stage
Set #1
Set #2
Set #3
Set #4
Set #5
Set #6
Fix
Select Set Capable of Minimizing Evaluation Index from Remaining Sets #2 to #6
Second Stage
Set #1
Set #2
Set #3
Set #4
Set #5
Set #6
Fix
Select Set Capable of Minimizing Evaluation Index from Remaining Sets #2 to #4, and #6
Fix
Second Stage
Set #1
Set #2
Set #3
Set #4
Set #5
Set #6
Output
Set #1
Set #3
Set #5

FIG.11

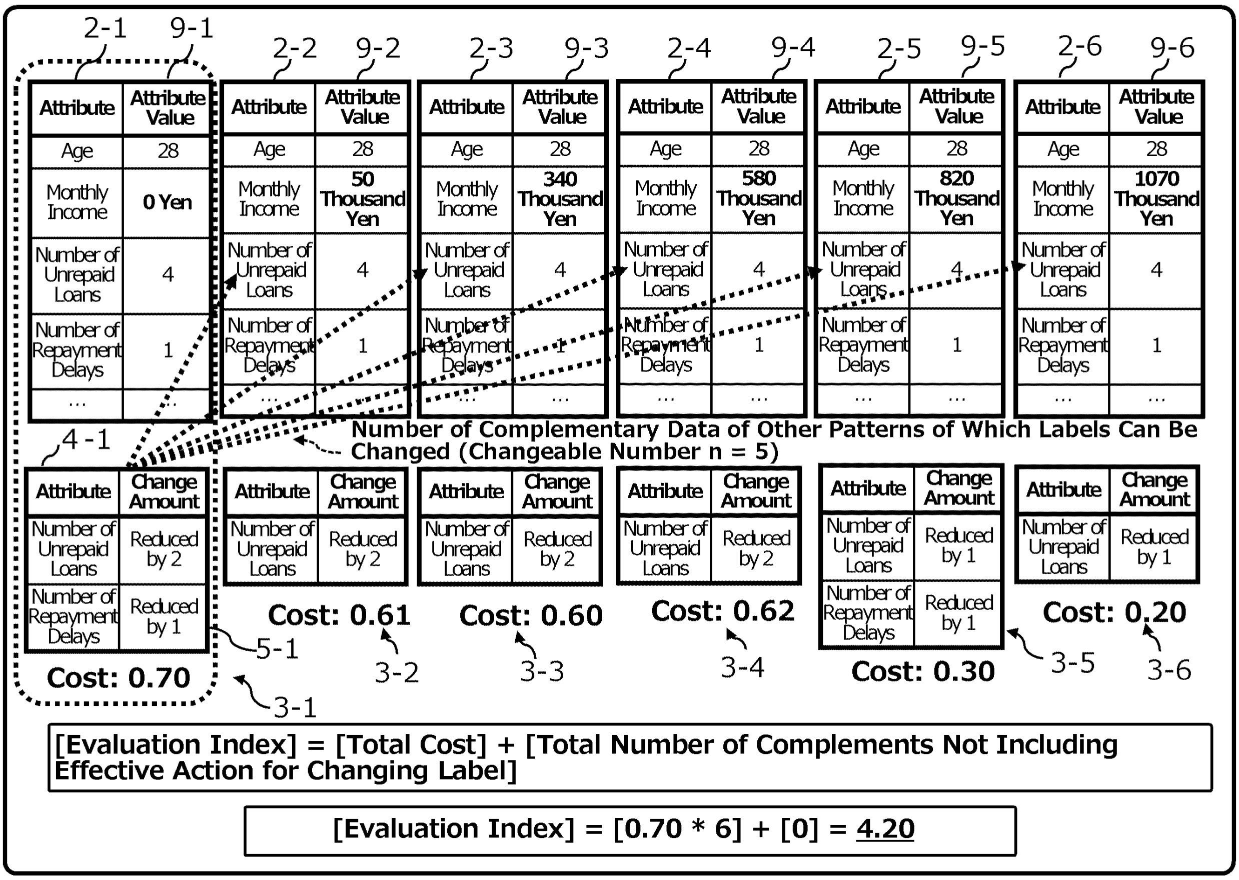
2-1 9-1 2-2 9-2 2-3 9-3 2-4 9-4 2-5 9-5 2-6 9-6
Attribute | Attribute Value
Age | 28
Monthly Income | 0 Yen
Number of Unrepaid Loans | 4
Number of Repayment Delays | 1
Monthly Income | 50 Thousand Yen
Monthly Income | 340 Thousand Yen
Monthly Income | 580 Thousand Yen
Monthly Income | 820 Thousand Yen
Monthly Income | 1070 Thousand Yen
Number of Complementary Data of Other Patterns of Which Labels Can Be Changed (Changeable Number n = 5)
4-1
Attribute | Change Amount
Number of Unrepaid Loans | Reduced by 2
Number of Repayment Delays | Reduced by 1
Number of Unrepaid Loans | Reduced by 1
Cost: 0.70
Cost: 0.61
Cost: 0.60
Cost: 0.62
Cost: 0.30
Cost: 0.20
5-1 3-1 3-2 3-3 3-4 3-5 3-6
[Evaluation Index] = [Total Cost] + [Total Number of Complements Not Including Effective Action for Changing Label]
[Evaluation Index] = [0.70 * 6] + [0] = 4.20

FIG.12

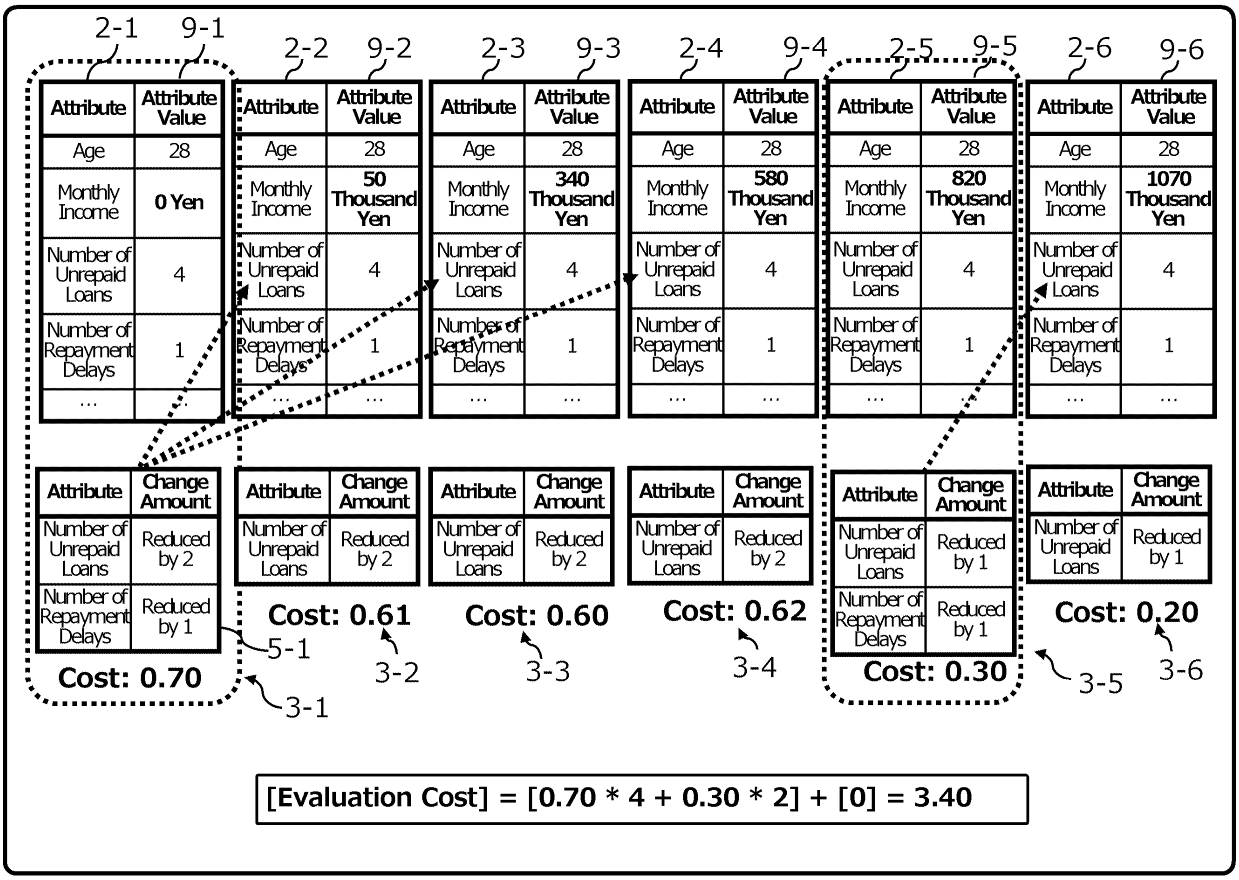

2-1 9-1 2-2 9-2 2-3 9-3 2-4 9-4 2-5 9-5 2-6 9-6
Attribute | Attribute Value
Age | 28
Monthly Income | 0 Yen
Number of Unrepaid Loans | 4
Number of Repayment Delays | 1
Monthly Income | 50 Thousand Yen
Monthly Income | 340 Thousand Yen
Monthly Income | 580 Thousand Yen
Monthly Income | 820 Thousand Yen
Monthly Income | 1070 Thousand Yen
Attribute | Change Amount
Number of Unrepaid Loans | Reduced by 2
Number of Repayment Delays | Reduced by 1
Number of Unrepaid Loans | Reduced by 1
Cost: 0.70
Cost: 0.61
Cost: 0.60
Cost: 0.62
Cost: 0.30
Cost: 0.20
5-1
3-1 3-2 3-3 3-4 3-5 3-6
[Evaluation Cost] = [0.70 * 4 + 0.30 * 2] + [0] = 3.40

FIG.13

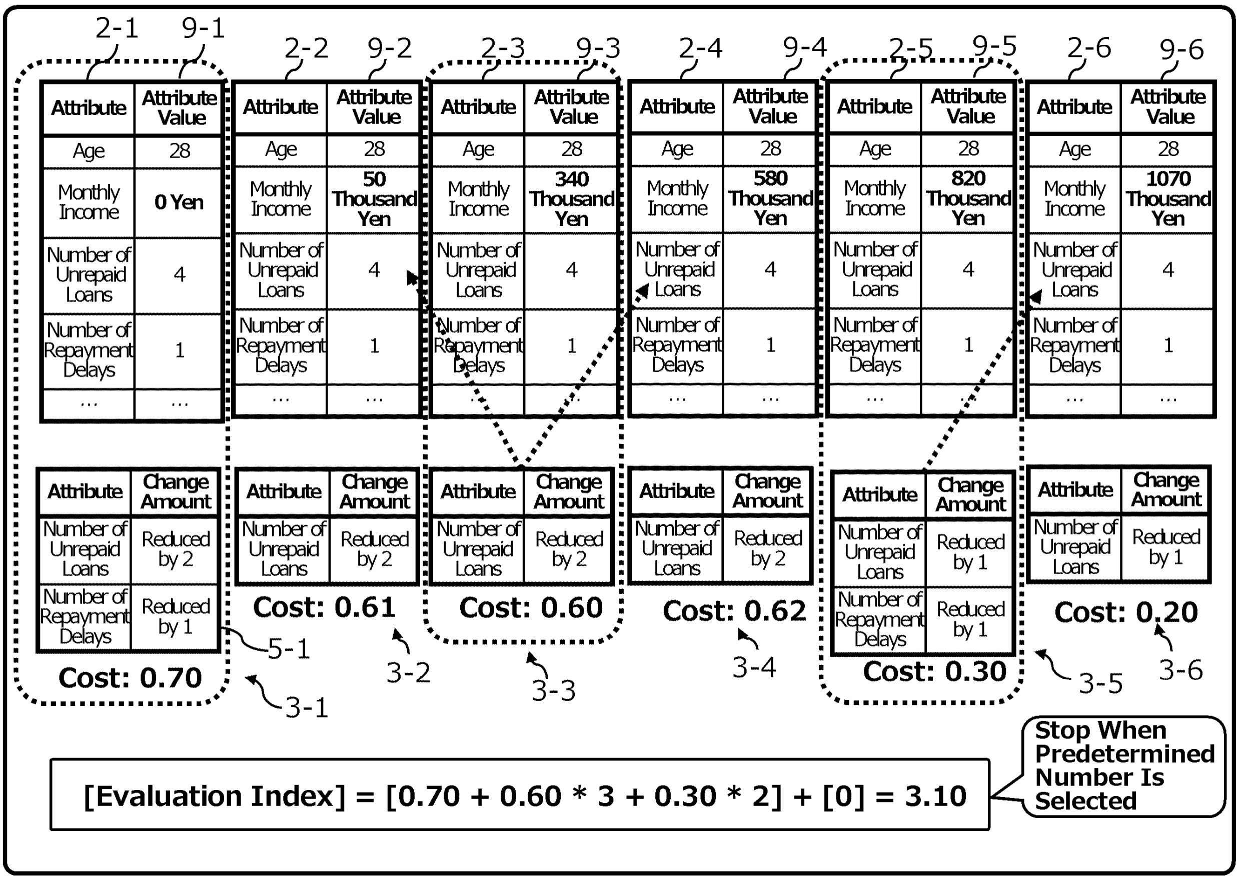

2-1 9-1 2-2 9-2 2-3 9-3 2-4 9-4 2-5 9-5 2-6 9-6
Attribute
Attribute Value
Age
28
Monthly Income
0 Yen
50 Thousand Yen
340 Thousand Yen
580 Thousand Yen
820 Thousand Yen
1070 Thousand Yen
Number of Unrepaid Loans
4
Number of Repayment Delays
1
Change Amount
Reduced by 2
Reduced by 1
Cost: 0.70
Cost: 0.61
Cost: 0.60
Cost: 0.62
Cost: 0.30
Cost: 0.20
5-1
3-1 3-2 3-3 3-4 3-5 3-6
[Evaluation Index] = [0.70 + 0.60 * 3 + 0.30 * 2] + [0] = 3.10
Stop When Predetermined Number Is Selected

FIG.14

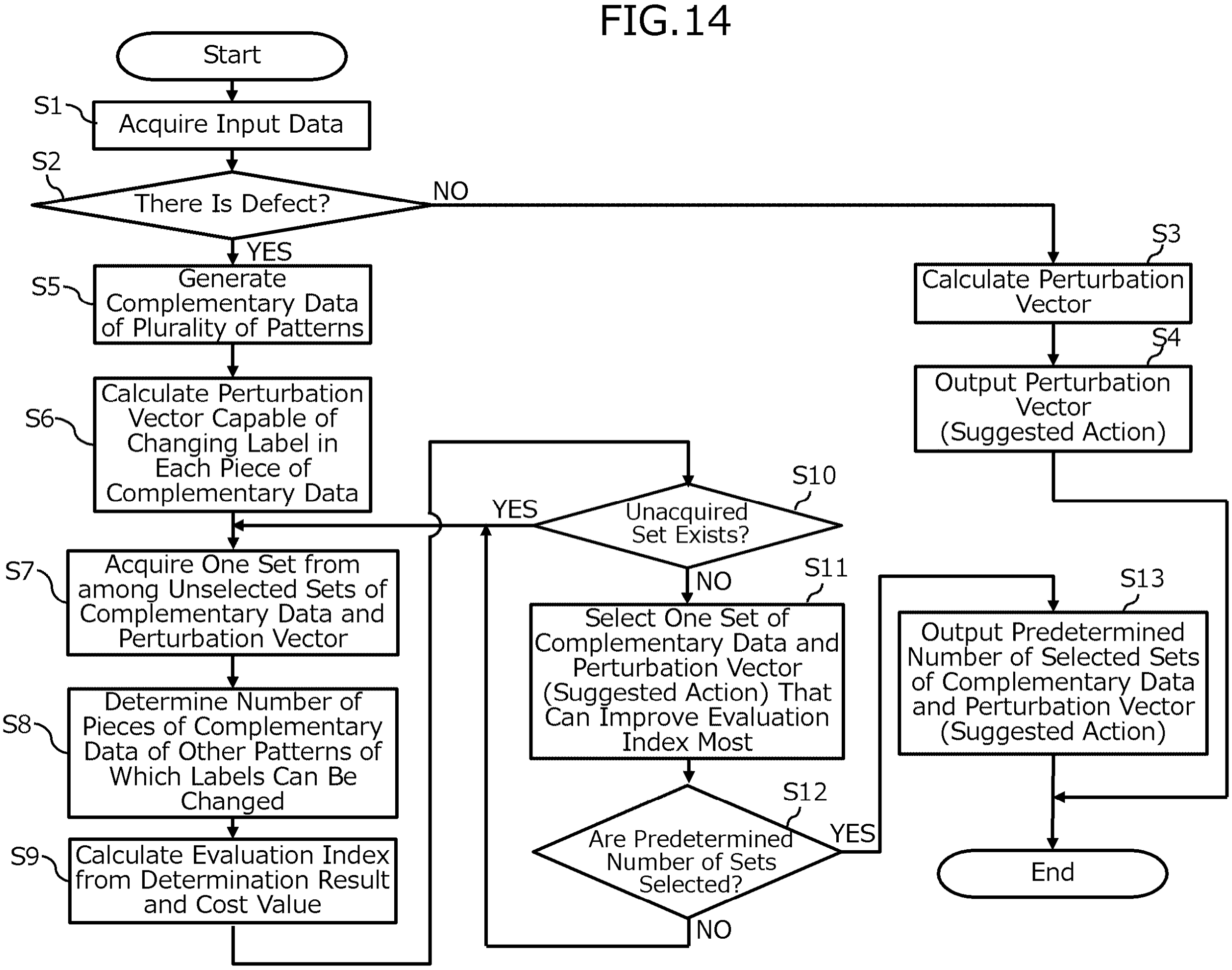
Start
S1
Acquire Input Data
S2
There Is Defect?
NO
YES
S3
Calculate Perturbation Vector
S4
Output Perturbation Vector (Suggested Action)
S5
Generate Complementary Data of Plurality of Patterns
S6
Calculate Perturbation Vector Capable of Changing Label in Each Piece of Complementary Data
S10
Unacquired Set Exists?
YES
NO
S7
Acquire One Set from among Unselected Sets of Complementary Data and Perturbation Vector
S11
Select One Set of Complementary Data and Perturbation Vector (Suggested Action) That Can Improve Evaluation Index Most
S13
Output Predetermined Number of Selected Sets of Complementary Data and Perturbation Vector (Suggested Action)
S8
Determine Number of Pieces of Complementary Data of Other Patterns of Which Labels Can Be Changed
S12
Are Predetermined Number of Sets Selected?
YES
NO
S9
Calculate Evaluation Index from Determination Result and Cost Value
End

FIG.15

**Value of Monthly Income Is Defective (Actual Value Is $3000)**

(a) First Set (Cost Value 2.10) Approval at Time of Actual Value

9-1b

2-1b

3-1b

| | Attribute | Attribute Value |
|---|---|---|
| Complementary Data | Monthly Income (Range) | $0(0～0) |
| Perturbation Vector (Action) | Number of Repayment Delays for 30 to 59 Days<br>Number of Unrepaid Loans | -1 (Reduced by 1)<br>-1 (Reduced by 1) |

(b) Second Set (Cost Value 0.79) Rejection at Time of Actual Value

9-2b

2-2b

3-2b

| | Attribute | Attribute Value |
|---|---|---|
| Complementary Data | Monthly Income (Range) | $8227(8227～10750) |
| Perturbation Vector (Action) | Number of Unrepaid Loans | -4 (Reduced by 4) |

(c) Third Set (Cost Value 1.88) Approval at Time of Actual Value

9-3b

2-3b

3-3b

| | Attribute | Attribute Value |
|---|---|---|
| Complementary Data | Monthly Income (Range) | $3471(553,5831) |
| Perturbation Vector (Action) | Number of Repayment Delays for 30 to 59 Days | -1 (Reduced by 1) |

FIG.16

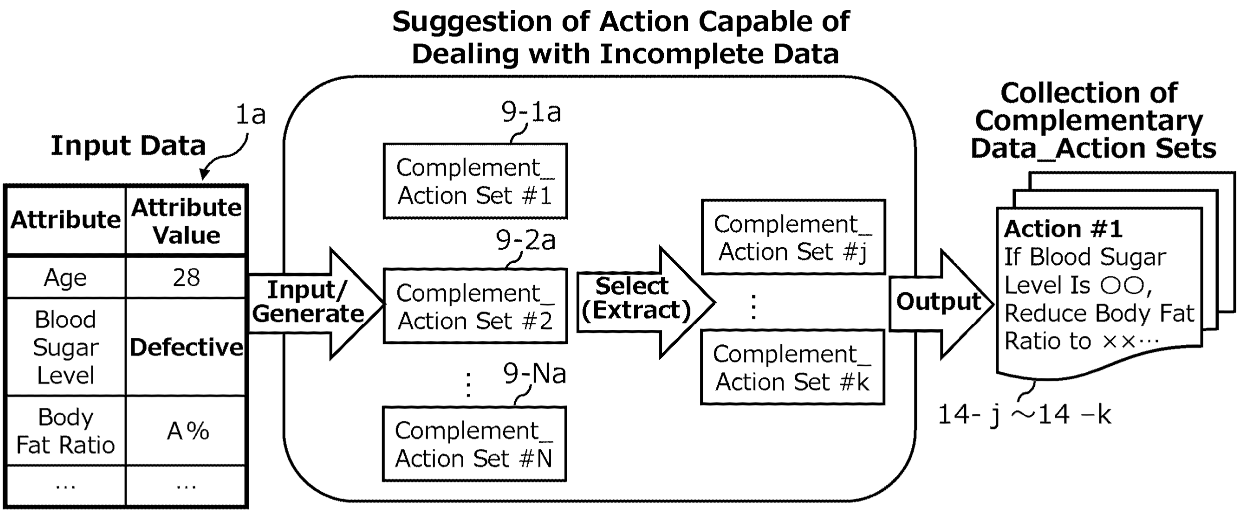
Suggestion of Action Capable of Dealing with Incomplete Data
Input Data
1a
Attribute
Attribute Value
Age
28
Blood Sugar Level
Defective
Body Fat Ratio
A%
…
…
Input/ Generate
9-1a
Complement_ Action Set #1
9-2a
Complement_ Action Set #2
9-Na
Complement_ Action Set #N
Select (Extract)
Complement_ Action Set #j
Complement_ Action Set #k
Output
Collection of Complementary Data_Action Sets
Action #1
If Blood Sugar Level Is ○○, Reduce Body Fat Ratio to ××…
14- j ~14 –k

## INTERNATIONAL SEARCH REPORT

International application No.
**PCT/JP2023/045177**

### A. CLASSIFICATION OF SUBJECT MATTER

***G06N 5/045***(2023.01)i
FI: G06N5/045

According to International Patent Classification (IPC) or to both national classification and IPC

### B. FIELDS SEARCHED

Minimum documentation searched (classification system followed by classification symbols)

G06N5/045

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2014-081878 A (HITACHI SYSTEMS LTD) 08 May 2014 (2014-05-08) entire text, all drawings | 1-12 |
| A | JP 2001-312586 A (TOKIO MARINE & FIRE INSURANCE CO., LTD.) 09 November 2001 (2001-11-09) entire text, all drawings | 1-12 |
| A | JP 2019-179457 A (FUJITSU LIMITED) 17 October 2019 (2019-10-17) entire text, all drawings | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (July 2022)

**INTERNATIONAL SEARCH REPORT**
**Information on patent family members**

International application No.
**PCT/JP2023/045177**

| Patent document cited in search report | Publication date (day/month/year) | Patent family member(s) | Publication date (day/month/year) |
|---|---|---|---|
| JP 2014-081878 A | 08 May 2014 | (Family: none) | |
| JP 2001-312586 A | 09 November 2001 | US 2001/0039523 A1<br>entire text, all drawings | |
| JP 2019-179457 A | 17 October 2019 | US 2019/0303789 A1<br>entire text, all drawings | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022003816 A